# EUROPEAN PATENT APPLICATION

(11) **EP 2 732 863 A1**
(43) Date of publication of application: **21.05.2014**
(21) Application number: 12192849.3
(22) Date of filing: 15.11.2012
(51) Int. Cl.: B01D 29/23, B01D 63/06, B01D 63/14, B01D 29/21

(54) **Filter Element**

(71) Applicant: Pall Corporation, Port Washington, NY 11050 (US)
(72) Inventor: Zeiler, Martin, 73529 Schwäbisch Gmünd (DE); Diemer, Wolfgang, 73550 Waldstetten (DE)
(74) Representative: Hoeger, Stellrecht & Partner Patentanwälte

(57) **Abstract**

A filter element for use in cross-flow and dead-end filtration which can be manufactured with reasonable costs and allows adaptation to various filtration applications comprises a porous sheet material having a non-filtrate side and a filtrate side, said sheet material being arranged in a plurality of pleats extending in a longitudinal direction, each pleat having a first and second wall portion extending perpendicular to said longitudinal direction from a first, open end to a second, closed end of the pleats, the first and second wall portions being spaced apart from one another; and a non-filtrate fluid supply arrangement extending along the longitudinal direction of the pleats, wherein said fluid supply arrangement is in fluid communication with the first or second end of each pleat substantially along the whole length of the pleat, said fluid supply arrangement being provided with openings designed to provide a fluid flow from the supply arrangement into the pleats in a direction substantially perpendicular to the longitudinal direction thereof.

## Description

### FILED OF THE INVENTION

The present invention relates to a filter element and a filter system comprising such filter element.

In particular, the present invention relates to a filter element comprising a porous sheet material for separation of one or more components of a fluid (in the following called non-filtrate) in a so-called dead-end or cross-flow filtration step.

### BACKGROUND OF THE INVENTION

Filter elements comprising pleated porous sheet materials in the form of depth filter material are abundant in the art for dead-end filtration. WO 00/40319 A1 discloses dead-end filtration filter elements comprising various types of pleated filter sheet media in a so-called modified W-pleat configuration in order to achieve a high density of filter medium comparable to so-called spiral pleated filter elements. The filter media may be of the depth filter or membrane type.

Filter elements comprising a plurality of hollow fibers as membrane materials are abundant in the art of cross-flow filtration.

Other prior art filter elements for cross-flow filtration use porous membrane materials in sheet form. Typically, a plurality of membrane sheets is assembled in flat configuration in filtration cassettes.

Filter elements for cross-flow filtration comprising corrugated or pleated porous membrane sheet materials are known, e.g., from WO 2005/094963 A1 and WO 2007/038542 A2.

Fouling of the membrane is an important aspect which has been addressed in various approaches in the prior art. Pressure drop across the membrane and along the fluid flow path of the non-filtrate and homogeneous filtration conditions over the full area of the membrane is another important aspect to be considered.

### BRIEF SUMMARY OF THE INVENTION

The object of the present invention resides in providing a filter element for use in cross-flow or dead-end filtration which can be manufactured with reasonable costs and is advantageous over the prior art in that it allows adaptation to the challenges of various filtration applications without undue efforts.

According to one aspect of the present invention, the filter elements are designed for use in the field of food and beverage production.

According to other aspects of the present invention the filter elements may be designed for use in the field of fluid treatment in pharmaceutical and biotech applications and the processing of fuels and chemicals.

The object of the present invention is solved by a filter element according to claim 1.

The filter element according to the present invention may be designed as a filter element for dead-end filtration or for cross-flow filtration.

The term filtrate as used in the present specification and claims has likewise to be understood as filtrate/permeate in cases where the filter element is designed for cross-flow filtration, even when it is not specifically mentioned.

Typically, the longitudinal direction of the pleats is in parallel to the axial direction of the filter element.

The non-filtrate fluid supply arrangement of the inventive filter element is in fluid communication with the first or second end of each pleat along the whole length of the pleat and provides a non-filtrate fluid flow into the pleats in a direction perpendicular to the longitudinal direction of the pleats with increased uniformity.

Advantageously, the inventive filter elements may be designed to allow close control of the filtration conditions and be easily adapted to the requirements of a multitude of applications. The filter elements of the present invention may easily be designed to show homogenous fluid flow of the non-filtrate and controlled, especially substantial uniform pressure drop across the sheet material along the length of the fluid flow paths of the non-filtrate.

The filter elements of the present invention are very well suited for single pass cross-flow filtration. In multi-stage single pass filtration the filter elements can be adapted to the increasing viscosity of the retentate of an earlier stage which serves as non-filtrate in the following stage.

The filter elements of the present invention can provide about the same surface area of sheet material per volume as compared to hollow fiber membrane filter elements. Advantageously, the filter elements of the present invention however show a remarkably lower pressure drop, a more homogeneous fluid flow, reduced tendency for fouling and longer service life.

### DETAILED DESCRIPTION OF THE INVENTION

In a large number of cases the filter element of the present invention will be designed as a cross-flow filter element, the filter element according to the present invention nevertheless may be designed as a dead-end filtering device.

The sheet material used to provide the plurality of pleats may be selected from depth filter material or membrane type filter material. In case of cross-flow filtration the membrane type filter material is preferred.

In the following, more detailed description, the focus will be on cross-flow filter elements, however, the details, advantages and other comments provided will also apply to the dead-end devices to the extent such comments do not relate to specific features of cross-flow devices like the design of the retentate flow path etc.

The filter elements according to the present invention are especially suitable for cross-flow filtration since the fluid flow paths for the non-filtrate typically are relatively short as compared to conventional cross-flow filtration devices.

Typically, the pleats will extend in the direction perpendicular to their longitudinal direction (or the axis of the filter element) corresponding to a length of the fluid flow path of the non-filtrate within the pleats from one end of the pleats to the other end of about 50 mm or more.

A typical preferred upper limit for the length of the flow path in this perpendicular direction is about 500 mm, more preferably about 300 mm, most preferably about 200 mm.

The pleats can be provided by corrugating the sheet material according to a preferred aspect of the present invention.

However, the pleats can also be formed by joining strips of sheet material forming the first and/or second end of the wall portions of the pleats along parallel edges of the strips.

The porous sheet material is preferably selected from flexible materials, but rigid materials can also be used at least for a number of embodiments discussed below.

The fluid supply arrangement extending along the longitudinal direction of the pleats may be designed with one or more channels of a relatively large cross-section providing unobstructed feed of the non-filtrate fluid supply into the pleats.

The non-filtrate supply arrangement may include a central feed channel supplying the non-filtrate into the individual pleats. In alternative embodiments the non-filtrate supply arrangement of the filter element may include several feed channels to supply non-filtrate into the individual pleats.

Both types of supply arrangements may have the feed channel(s) designed with a cross-sectional area decreasing from the feed side of the filter element to the opposite end thereof, the latter one will typically be closed.

The filter element when designed for cross-flow filtration will further comprise a retentate receiving arrangement extending substantially along the whole length of the pleats. Said receiving arrangement is likewise provided with openings substantially along the whole length of the pleats receiving retentate from the pleats at one end thereof in a direction substantially perpendicular to the longitudinal direction of the pleats.

The retentate receiving arrangement preferably includes one or several channels with a cross-sectional area increasing from its closed end to the end discharging said retentate from the filter element.

In specific dead-end filtration applications an additional non-filtrate arrangement may be provided the structure of which may similar if not identical to the retentate receiving arrangement. The pleats of the filter element will then receive non-filtrate at both of their first and second ends.

Typically, the plurality of pleats is arranged around a central axis of the filter element circumferentially at predetermined, preferably regular distances to one another, optionally the open ends of the pleats being located closer to the central axis than the closed ends of the pleats. The term open end refers to the portion where the non-filtrate surfaces of the wall portions of a pleat are spaced apart whereas at the closed end the non-filtrate surfaces of the wall portions are in contact. In a large number of embodiments the open end of the pleats will be located in the interior of the filter element.

In some embodiments the open ends of the pleat may be located at the outer periphery and the closed ends of the pleats are then directed to the central axis of the filter element.

Non-filtrate fluid may be fed into the open ends and/or the closed ends of the pleats of a filter element.

The filter element according to a preferred embodiment comprises the pleats extending radially in a substantially straight direction.

According to another preferred embodiment the pleats of the filter element extend obliquely to the radial direction and more preferably have a curved or arcuate cross-sectional shape, customarily called spiral pleat. The flow characteristics in curved pleats are advantageous over the straight configuration in that fluid flow in the channels of a pleat create so-called Dean vortices which counteract fouling of the non-filtrate surface of the sheet material. This is of special importance when a membrane type sheet material is used.

### Structural elements

Preferably, the filter element according to the present invention includes structural elements positioned within the pleats at the non-filtrate side of the porous sheet material. The structural elements direct the fluid flow along the first and second wall portions of the pleats from one end to the other end thereof.

Preferably, the structural elements do not shield a substantial part of the upstream or non-filtrate surface of the sheet material. Therefore, the structural elements are preferably designed so as to limit the contact areas of the sheet material and the structural elements to a minimum.

Generally said structural elements may be of a unitary structure or comprise two or more separate components.

According to one aspect of the invention the structural elements may be used to divide the space between the wall portions of a pleat into a non-filtrate flow path and a reversed non-filtrate flow path or retentate flow path. The length of the flow path of the non-filtrate then amounts to about the double length, i.e., about 100 mm or more. The preferred upper limit for such length is then about 1000 mm, more preferably about 600 mm, most preferably about 400 mm.

According to a further preferred aspect of the invention the structural elements guide the fluid flow of the non-filtrate in a direction substantially perpendicular to the longitudinal direction of the pleats.

Preferably, the structural elements constitute a plurality of parallel channels within a pleat oriented perpendicular to the longitudinal direction of the pleats. This allows a very good control of the non-filtrate fluid flow within the pleats.

It is preferred that the structural elements extend within a pleat substantially form the first to the second end thereof and thereby control and guide the fluid flow of the non-filtrate from one end of the pleat to its other end.

Structural elements of an extended, e.g., wall- or sheet-like structure may be used to provide a fluid flow path for the non-filtrate following a first surface of the structural element, e.g., from the open end of a pleat to its closed end where the fluid flow may be deflected and then follows the reverse or second surface of the structural element in the direction back to the open end thereof.

The structural element of an extended structure may be provided with a plurality of parallel projections constituting a plurality of parallel channels running perpendicular to the longitudinal direction of the pleats.

The structural elements may according to another aspect of the present invention substantially consist of a plurality of rods, e.g. spikes or ribs, extending from a common longitudinal member in parallel and forming channels for the non-filtrate fluid flow within the pleats which are limited on two opposite sides thereof by the first and second wall portion of the porous sheet material.

The structural elements may be of a unitary structure or comprise two or more components accommodated within one pleat.

In accordance with still a further aspect of the present invention the structural elements may include a filtrate or permeate collecting space which is separated from the non-filtrate channels by additional sheet material. According to one variant the filtrate/permeate collecting space is in direct fluid communication with the filtrate/permeate side of the two wall portions of the sheet material forming the pleats. In an alternative variant the structural element comprises a separate component of a fluid pervious material supporting porous sheet material and providing a filtrate/permeate collecting space.

The filtrate/permeate collecting space may form or contribute to provide a filtrate/permeate discharging channel within the separate component of the structural element extending substantially along the whole length of the pleat.

Furthermore the structural element may be formed from a fluid pervious material of a structure allowing lining of the structural element with additional amounts of sheet material.

The parallel channels provided within the pleats guiding the non-filtrate from one end to the other may be formed with a cross sectional area increasing along the fluid flow path in order to cope with the steadily decreasing fluid pressure within the channels.

In typical embodiments of the present invention the structural elements are parts separate from the sheet material.

The structural elements may be attached to a support body. The structural element and the support body may be formed as a unitary element, e.g. by injection molding.

As an alternative the support body may comprise a central tubular element to which the structural element may be attached in a separate step.

According to a further alternative the structural elements may be attachable directly to one another without an intermediate supporting structure.

According to still a further alternative the structural elements are formed as individual parts and hold in place in the finished filter element in cooperation with other components of the filter element like the drainage elements discussed below and/or a wrapping member at the outer periphery of the filter element.

### Fluid flow

In contrast to the teaching of the prior art, the present invention directs the fluid flow within an individual pleat substantially in a direction perpendicular to the longitudinal direction of the pleats (or axis of the filter element). The front and end faces of the pleats are closed when the filter element is in use in a filter system. Typically, the filter element is complemented to form a filter module by end caps sealing off the end faces of the filter element.

Preferably, the filter element comprises structural elements positioned within the pleats at the non-filtrate side of the sheet material, which more preferably are configured substantially co-extensive with the walls of the pleats both in longitudinal and perpendicular direction of the filter element.

The structural elements positioned within the pleats preferably define fluid flow paths extending from one end of a pleat to its other end.

As mentioned before, the fluid flow path preferably has a length from one end of a pleat to its other end of about 500 mm or less, more preferably about 300 mm or less, especially of about 200 mm or less. In some food applications path lengths of about 500 mm or more may be applicable. In case the non-filtrate fluid flow within a pleat is reversed about the double of the aforementioned values apply.

According to one type of filter elements the fluid flow paths of the non-filtrate within the pleats run from the open ends of the pleats to the closed ends where its flow direction is reversed in the direction to the open end of the pleats, where it optionally exits the pleats as retentate. Said structural elements are then of the wall- or sheet-like type and separate the flow of non-filtrate in the two opposite directions within each pleat.

According to another type of inventive filter elements the non-filtrate is supplied to the open ends of the pleats and the retentate is collected at the closed ends of the pleats.

According to still another type of filter elements of the present invention the non-filtrate is supplied to the closed ends of the pleats and the retentate is collected from the open ends of the pleats.

As mentioned before, filter elements designed for cross-flow filtration comprising a retentate receiving arrangement may easily be used, eventually with some minor modifications, in dead-end filtration applications. The components of the retentate receiving arrangement may serve as an additional non-filtrate supply arrangement. Non-filtrate is then separately received at both ends of the pleats, flow in opposite directions (still perpendicular to the longitudinal direction of the pleats) and meet within the pleat, e.g., at half length of the pleat.

### Pleat Geometry

The wall portions of the pleats are arranged according to a first aspect of the present invention substantially in parallel. This configuration requires an arcuate portion of sheet material forming the closed end of the pleat having a relatively small radius. In case non-filtrates include particulate matter marked abrasion effects may be observed. Therefore, typically the sheet material at the closed end of the pleats is protected or shielded, especially if the fluid flow of the non-filtrate is reversed in its direction at the closed end of the pleat.

In a filter element according to a further aspect of the present invention the walls of the pleats have a greater distance from one another at the closed ends of the pleats than at the open ends. The arcuate portion of sheet material forming the closed end of the pleat therefore may have a relatively large radius.

### Porous Sheet Materials

The porous sheet material used in the filter element according to the present invention may be selected from membrane sheet material or depth filter sheet material.

Suitable depth filter materials have a porosity in the range from about 0.1 pm to about 100 µm, more preferably about 0.1 to about 10 µm.

Typically, the porous membrane sheet material will be selected from membranes suitable for micro-, ultra- and nano-filtration. The membranes are preferably polymer-based membranes, the polymer being advantageously selected from polyolefin, e.g., polyethylene (PE) and polypropylene (PP), polyamide (PA), polytetrafluoroethylene (PTFE), polyvinylidene difluoride (PVDF), polysulfone (PS) and polyethersulfone (PES).

Other preferable membranes may be made from materials based on inorganic materials, e.g., metal.

Typical examples of microfiltration membranes have pore sizes in the range of about 0.1 µm to about 10 µm.

Ultrafiltration membranes preferably have pore sizes in the range of 0.005 µm to about 0.1 µm. Typically, ultrafiltration membranes are used for the separation of molecules with a molecular mass in the range of about 0.5 kDalton to about 150 kDalton.

Typical membranes for nano-filtration have pore sizes in the range of about 0.001 µm to about 0.01 µm.

### Drainage Elements

The filter element according to the present invention preferably comprises drainage elements arranged on the filtrate or permeate side of the sheet material. The drainage elements are fluid pervious structures and preferably support the porous sheet material on its filtrate/permeate surface.

Advantageously the drainage elements are designed to provide a higher fluid flow resistance to the filtrate/permeate at such end of the pleats receiving non-filtrate from the supply arrangement and to provide a lower fluid flow resistance to the filtrate/permeate at the other end of the fluid flow path of a pleat.

The drainage elements are placed in between adjacent pleats and stabilize the overall configuration of the filter element.

### Filter System

The filter elements according to the present invention may be individually or group wise accommodated in a housing of a filter system, the housing comprising an inlet for non-filtrate which is in fluid communication with the non-filtrate supply arrangement, a filtrate or permeate outlet in fluid communication with the filtrate/permeate side of the porous membrane sheet material, and optionally a retentate outlet in fluid communication with the retentate receiving arrangement.

The non-filtrate inlet is provided at one end of the housing and the retentate outlet is provided at an opposite end of the housing in some of the filter modules.

According to another type of filter system the non-filtrate inlet and the retentate outlet are provided at the same end of the housing.

### BRIEF DESCRIPTION OF THE DRAWINGS

- Figure 1A: a filter system comprising a filter module with a first embodiment of a filter element according to the present invention;
- Figure 1B: the filter module of the filter system of Figure 1A;
- Figure 2: the filter element of Figure 1A in a perspective representation;
- Figure 3: a support body of the filter element of Figure 2;
- Figure 4A: a partial cross-section of the filter element of the filter module of Figure 2 along line IVA - IVA;
- Figures 4B, 4C and 4D: a cross-section of a part of the filter element along lines IVB - IVB and IVC - IVC indicated in Figure 4A and a modification thereof, respectively;
- Figure 5: a detail of a second embodiment of a filter element according to the present invention in cross-sectional representation;
- Figure 6: a graph comparing pressure drop versus cross-flow velocity of various types of filter elements;
- Figure 7: a detail of a third embodiment of a filter element according to the present invention in cross-sectional representation;
- Figure 8: a support body for the third embodiment of a filter element of the present invention;
- Figure 9: a partial cross-sectional representation of a filter system comprising a module with a filter element according to the third embodiment;
- Figure 10: a part of a support body for a filter element of a modified third embodiment of the present invention;
- Figure 11: a perspective representation of a part of a filter element of the modified third embodiment of the present invention comprising a support body similar to the one of Figure 10;
- Figure 12: a filter system comprising a filter element of Figure 11;
- Figure 13: a filter system comprising a filter element similar to the first embodiment;
- Figure 14: a partial representation in cross-section of a filter system with a filter element of a fourth embodiment according to the present invention;
- Figure 15: a partial representation in cross-section of a filter system comprising a variant of the fourth embodiment of a filter element of the present invention;
- Figure 16: a filter system comprising a filter element similar to the fourth embodiment;
- Figure 17: a cross-sectional representation of a filter system comprising a filter element according to a fifth embodiment of the present invention;
- Figure 18: a partial representation in cross-section along the longitudinal direction of the filter system of Figure 17;
- Figure 19: a partial representation in cross-section of a filter system comprising a sixth embodiment of a filter element of the present invention;
- Figure 20: a partial representation in cross-section of a filter system comprising a seventh embodiment of a filter element of the present invention;
- Figure 21A: a partial representation in cross-section of filter system comprising an eighth embodiment of a filter element of the present invention;
- Figure 21B: a structural insert to be used in the filter element of Figure 21A;
- Figure 22A: a partial representation in cross-section of a filter system comprising a ninth embodiment of a filter element of the present invention;
- Figure 22B: structural inserts to be used in the filter element of Figure 22A; and
- Figure 23: a multi-stage single pass filtration system.

### DETAILED DESCRIPTION OF THE DRAWINGS

The present invention may be reduced to practice in a broad diversity of filter elements. Some typical embodiments designed for cross-flow filtration are described in the following with reference to the Figures. For a person of ordinary skill in the art it is readily apparent how these embodiments could be modified for use in dead-end filtration applications.

Although the embodiments described below will typically include a porous membrane as sheet material, it is easily understood that without departing from the gist of the invention and with a minimum of adaptations the sheet material may be in the form of a depth filter sheet material.

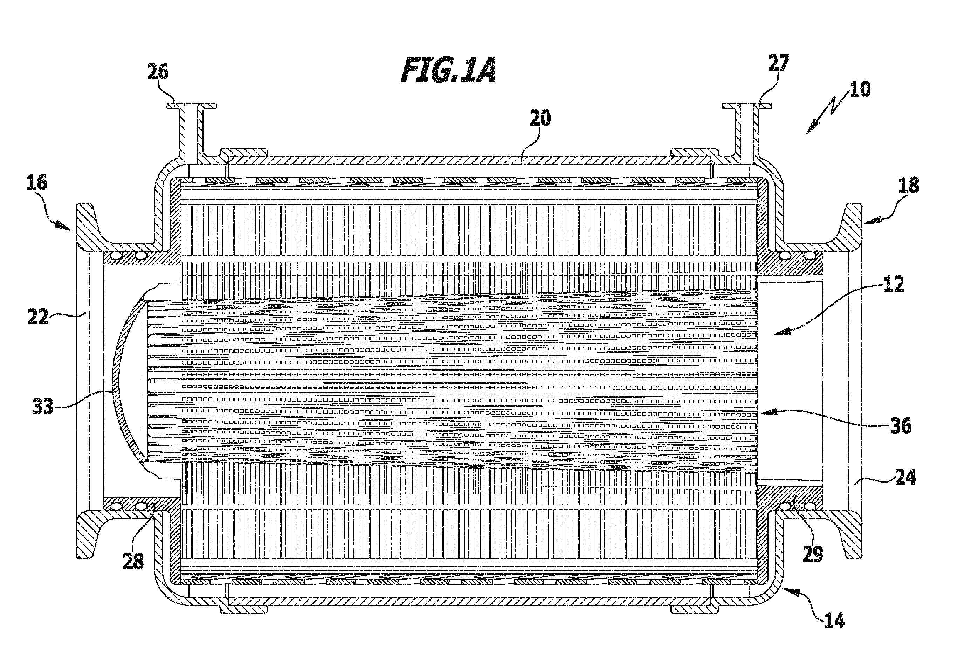

Figure 1A shows a representation of a filter system 10 accommodating a filter element 12 according to a first embodiment of the present invention in a cylindrical housing 14.

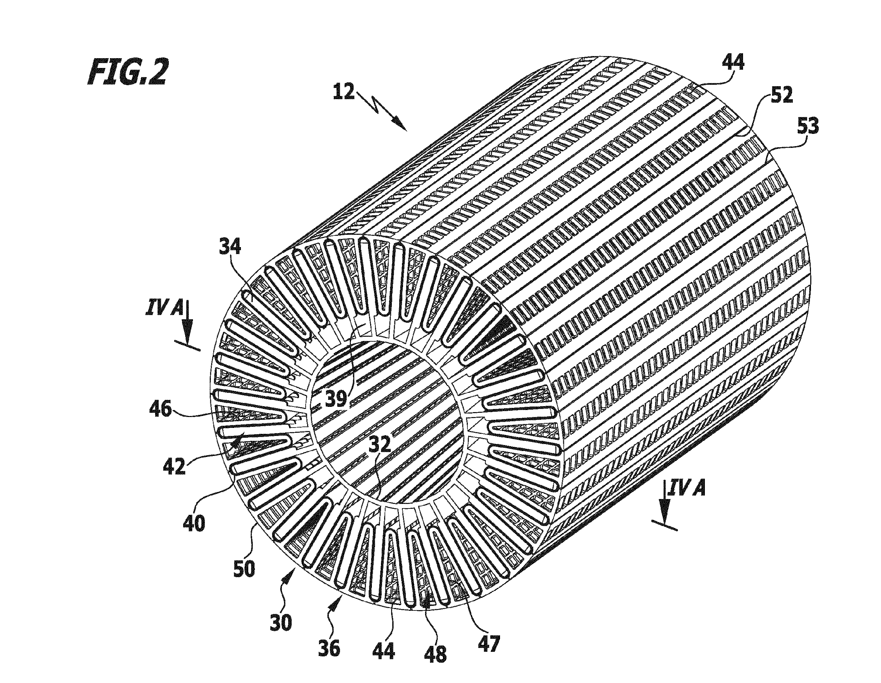

The filter element 12 will be described in more detail in connection with the Figures 2 to 4 below.

The housing 14 comprises two end portions 16, 18 and a cylindrical wall portion 20. The end portions 16, 18 are attached to the cylindrical wall portion 20 at axially opposite ends thereof in a fluid tight manner. The end portions 16 and 18 provide a non-filtrate inlet 22 and a retentate outlet 24, respectively, on axially opposite ends of the housing 14. Each of the end portions 16, 18 in addition provides a filtrate/permeate outlet opening 26 and 27, respectively, at a peripheral wall portion thereof.

The filter element 12 is typically provided with end caps 28, 29 on its opposite end faces, whereas the circumferential surface of the filter element 12 is covered by a fluid pervious wrapping member 31.

Filter elements provided with end caps and optionally with a wrapping member will also be called filter modules in the following description of specific embodiments of the present invention.

The filter element 12 is connected to the non-filtrate inlet of the housing 14 at one end via end cap 28 and at the axially opposite end via end cap 29 to the retentate outlet 24.

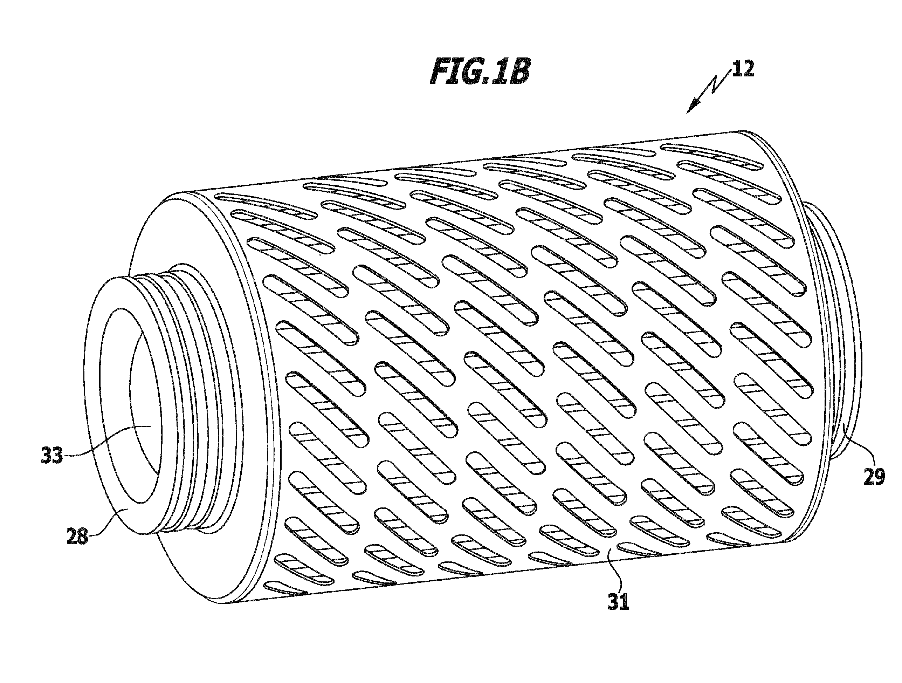

Figure 1B shows the filter element 12 provided with the end caps 28, 29 and the wrapping member 31 before it is inserted into the housing 14. The fluid pervious wrapping member or cage 31 holds the individual parts of the filter element 12 together and fixes them in a predetermined configuration, as will be described below.

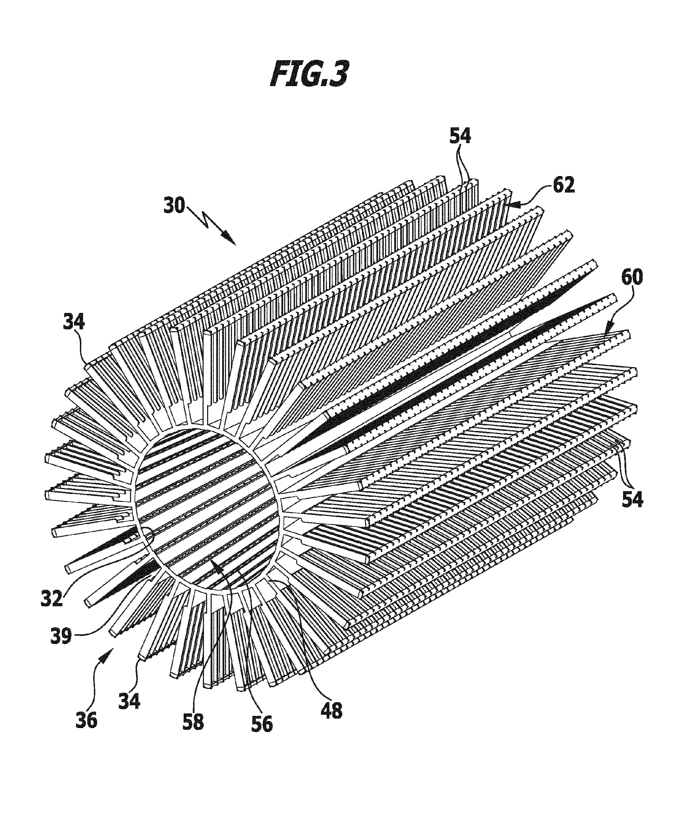

Figure 2 shows a perspective representation of the filter element 12. The filter element 12 comprises a support body 30 having a central tubular element 32 from which a plurality of structural elements 34 equally spaced from one another extend in radial directions. The central part of front end 36 of the tubular element 32 serves to discharge the retentate from the filter element 12 and is connectable via the end cap 29 to the retentate outlet 24 of the housing 14. At the opposite end the tubular element 32 is closed by a domed wall 33 (cf. Figure 1). Further details of the support body 30 are shown in Figure 3. The end cap 28 is designed to close the opposite side face except for a ring-shaped area where channels 39 are provided which serve to feed the non-filtrate into the individual pleats 42 of the filter element 12.

When the filter element is completed to a filter module, the end cap 29 then closes this front end 36 of the filter element 12 in a fluid tight manner except for the cross-sectional area of the central tubular element 32.

The filter element 12 comprises a sheet material 40 formed into a plurality of pleats 42, each pleat 42 accommodating one wall-like structural element 34 which is designed coextensive with the pleats 42. The space within each pleat is divided into two portions which are in fluid communication with one another at the closed end of the pleat. The pleats 42 of the sheet material 40 (i.e. their wall portions) are in contact with both surfaces of the structural elements 34 with the non-filtrate face of the sheet material. On the opposite side of the sheet material 40, in the following also called the filtrate/permeate or filtrate side, the sheet material is supported by drainage elements 44 which extend from the outer peripheral surface of the filter element 12 radially into the gap between two adjacent pleats 42.

In order to fully support the sheet material 40 of a pleat 42 on its permeate or filtrate side, the drainage elements 44 have a substantially wedge-shaped cross-section. The drainage elements 44 are designed as hollow members having two wall portions 46, 47 of a grid-like structure in between which a channel 48 with a triangular cross-section is formed. The drainage elements 44, especially their wall portions 46, 47, are made of a rigid material in order to ensure support of the sheet material 40 on its filtrate/permeate side independent of the pressure drop across the sheet material 40.

The channels 48 are in fluid communication with the filtrate/permeate side of the sheet material via a large number of openings within the wall portions 46, 47. At the outer periphery of the filter element 12, the gap between the two wall portions 46, 47 of the drainage elements 44 is advantageously bridged by a grid-like structural element 50 which allows discharge of filtrate/permeate from the channels 48 to the outer periphery of the filter element 12. The grid-like structural element 50 may be formed as a unitary member together with the two wall portions 46, 47.

The outer peripheral portion of the drainage elements 44, e.g., the grid-like elements 50 or the wall portions 46, 47, may be designed, as is the case for the embodiment of the inventive filter element 12 in Figure 2, such that their longitudinal side faces 52, 53 will abut one another. This measure provides the filter element 12 with a firmly secured arrangement of its structural elements 34 resistant to pressure fluctuations, especially when the cage member 31 is applied to hold all elements of the filter element 12 together.

The perspective representation of Figure 3 shows the support body 30 of filter element 12 with end face 36 around the central portion of which a plurality of channels 39 receive the non-filtrate from the non-filtrate inlet of the housing 12 via the end cap 28. The support body 30 may be obtained as a unitary element by injection molding. Suitable materials for producing the support body include but are not limited to polyolefins, e.g., polypropylene (PP), polyvinylidene difluoride (PVDF), polysulfone (PS), polyethersulfone (PES), polyamide (PA), polyester, e.g., polyethylene terephthalate (PET), and polyoxymethylene (POM). The same type of polymer material is suitable for producing the drainage elements 44, the cage 31 and the end caps 28, 29.

The structural elements 34 have on their surfaces preferably a plurality of parallel longitudinal projections 54 which run from the one end of the structural element 34, adjacent to the central tubular support element 32, to the outer peripheral end of the structural element 34 in a direction perpendicular to the axial direction of the support body 30. The structural elements 34 divide the space within the pleats into two halves an in addition into a plurality of parallel fluid flow paths or channels separated by the projections 54. The projections 54 are rounded at the free ends thereof in order to minimize the contact area with the sheet material 40 thus reducing a shielding effect to a minimum.

In between two adjacent longitudinal projections 54, flow paths or channels 60, 62 are formed on both surfaces of the structural element 34 providing a radially directed fluid flow along the surfaces of the wall portions of the sheet material 40 forming the pleats 42 and of the structural elements 34. At least part of the longitudinal projections 54 extend beyond the outer end of the structural elements 34, thereby supporting the pleats of the sheet material, e.g., a membrane, at their closed end at the outer periphery of the filter element 12, and allow fluid flow to be deflected at said outer peripheral end of the structural element 34 and the closed end of the pleat 42, respectively, and be redirected to the one end of the structural element 34 adjacent to the central tubular element 32 and the open end of the pleat 42.

The tubular element 32 comprises a plurality of openings 56 which extend from the interior 58 of the tubular element 32 to one side of the structural elements 34 and provide a discharge opening for non-filtered fluid as retentate from the channels 62 to the central channel (interior 58) formed within the tubular support element 32 of the support body 30.

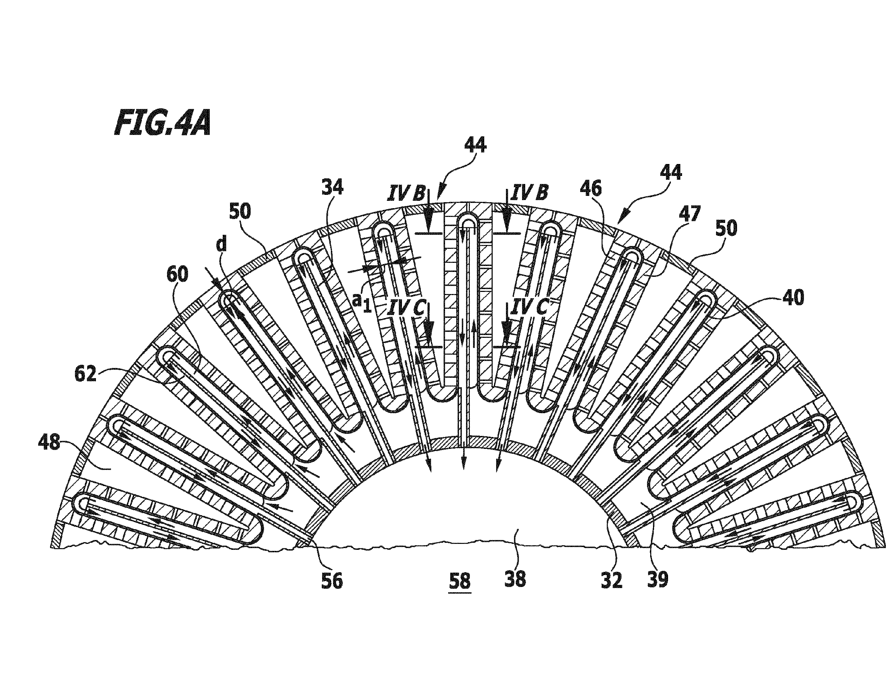

Thus, as is shown in detail in Figure 4A, in a typical filter element for cross-flow filtration the channels 60 on one side of the structural elements 34 receive non-filtrate from the channels 39 running on the outer peripheral surface of the tubular support element 32 in axial direction of the filter element 12, the fluid is then directed in its flow radially outwards versus the outer peripheral (closed) end of the pleats and the structural elements 34 of the filter element 12 where the fluid flow is deflected and redirected into the channels 62 of the structural elements 34 and to the central tubular support element 32. The non-filtrate exits the channels 62 at their end adjacent to the central tubular support element 32 through the openings 56 into the interior 58 of the tubular support element 32 as retentate.

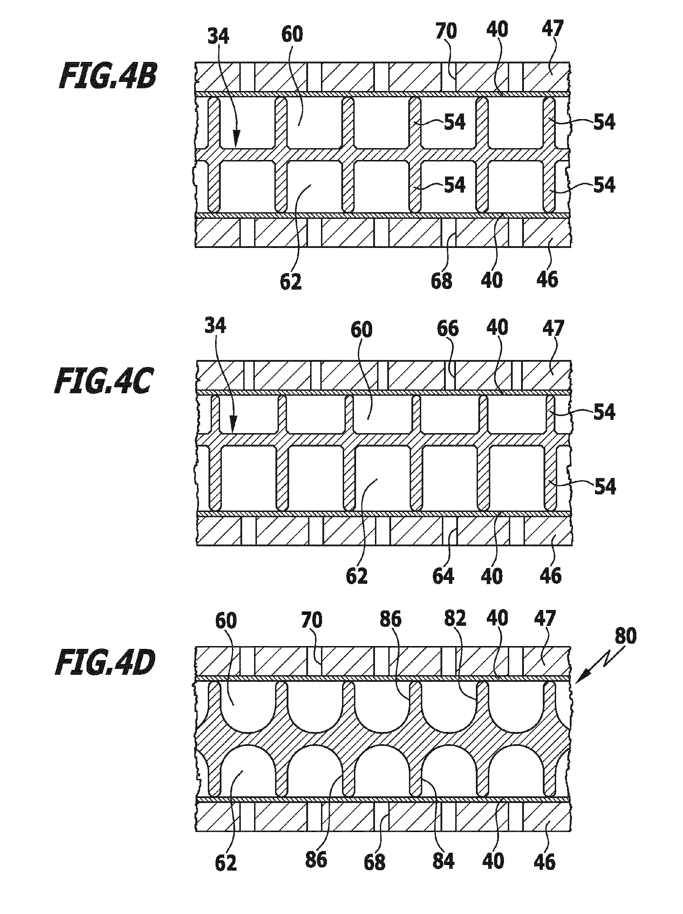

Figures 4B and 4C show two cross-sections of a structural element 34, the sheet material (e.g., membrane) 40, and the wall portions 46, 47 of the drainage element 44. While the cross-section of Figure 4B is taken at the outer peripheral end of the structural element 34 at line IVB-IVB, the cross-section of Figure 4C represents the geometry of the structural element 34 at its inner end, i.e., adjacent to the central tubular element 38 of support member 30 at line IVC-IVC.

As is apparent from the comparison of the two cross-sections of Figures 4B and 4C, the cross-sectional area of the channels 60 and 62 varies with the length of the fluid flow path of the non-filtrate. At the instance where the non-filtrate enters a pleat of sheet material 40, i.e., at the inner end of a channel 60 adjacent to a distribution channel 39, the cross-sectional area of the same is smallest.

Upon travelling along the channel 60 in the direction to the outer peripheral end thereof, the pressure of the fluid slightly decreases. In order to keep the fluid pressure substantially constant, the cross-section of channel 60 is increased. The cross-sectional area of the fluid flow paths increases to an intermediate size at the outer periphery of the filter element 12 where the fluid flow is reversed and directed into the channels 62. The cross-section of channels 62 increases from the outer peripheral end to the inner end thereof since also in this section of the fluid flow path of the fluid pressure of the non-filtrate would otherwise decrease.

By modifying the cross-sectional area of the channels 60, 62, substantially uniform pressure conditions may be obtained along the whole fluid flow paths within a pleat 42. This is the basis for obtaining substantially uniform filtration/permeation action along the whole of the flow path of the non-filtrate within a pleat 42.

In order to further improve uniformity of the filtration/permeation along the fluid flow path within a pleat 42, the drainage element 44 presents a modified flow resistance to the filtrate/permeate along the flow path. Figure 4C shows schematically openings 64 in wall 46 of the drainage element 44 of a relatively large diameter, whereas the openings 66 of wall 47 have a smaller diameter. The openings 68, 70 provided in the walls 46, 47 of the drainage elements 44 have about the same diameter, since their location along the flow path of the non-filtrate is about the same, i.e., close to the point where the fluid flow of the non-filtrate is reversed (Figure 4B).

The sizes of the channel cross-sections of channels 60, 62 as well as the openings 64, 66, 68 and 70 are not to scale and the representation of Figures 4B to 4D should be understood as of schematic nature only.

By adjusting the flow resistance of the drainage element 44 to the filtrate/permeate, the pressure drop across the sheet material 40 can be maintained at about the same level all along the fluid flow path of the non-filtrate. This again improves the filtration/permeation characteristics.

Figure 4D shows an alternative structural element 80. The position of the cross-section of Figure 4D along the fluid flow path corresponds to the one of the cross-section shown in Figure 4B. On both sides of the structural element 80, channels 82, 84 are provided by longitudinal projections 86. The free ends of the projections 86 are rounded off in order to minimize shielding of the sheet material surface. The form of the cross-sections of the channels 82, 84 is different from the cross-section of the channels 60, 62 in that, instead of a rectangular shape, the shape of a U is provided. This modified cross-sectional shape of the channels 82, 84 may further improve the filtration/permeation performance of filter element 12.

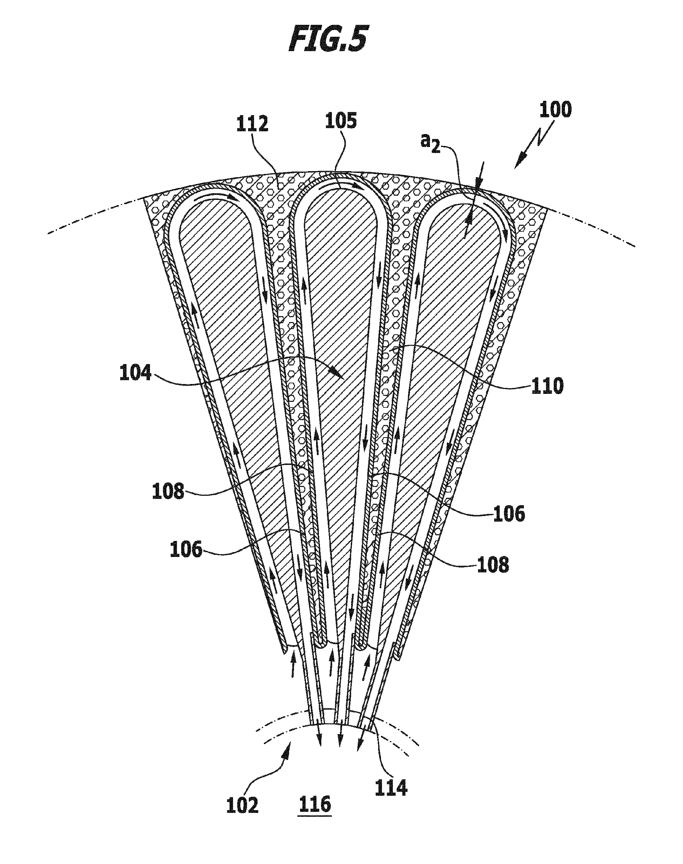

Figure 5 shows a partial cross-sectional representation of a filter element 100 according to a second embodiment of the present invention. In contrast to the first embodiment described above with reference to Figures 1 to 4, the filter element 100 comprises a support body 102 with structural elements 104. The cross-section of the structural elements 104 is wedge-shaped and expanding in the direction to their outer peripheral end 105. Preferably, the surfaces of the structural elements will be provided with parallel longitudinal projections (not shown) corresponding to the projections 54 of the structural elements 34 described above. This wedge-shaped cross-section provides a fluid flow path for the non-filtrate which at the point of reversal of the flow direction avoids sharp bends and the creation of excessive abrasion forces when the non-filtrate comprises particulate matter. The non-filtrate exits the pleats as retentate via channels 114 into the central space 116 of the filter element forming part of the retentate receiving arrangement.

In addition, the wedge-shaped structural elements 104 may be designed such that the sections 106, 108 of sheet material of two adjacent pleats are arranged at a small angle or substantially in parallel. The drainage element provided at the filtrate/permeate side of the sheet material may be designed as a flexible permeable film 110 which can be provided on the sheet material prior to forming the pleats. The drainage element 110 then fills the gap in between two adjacent pleats. A single layer of the film in between two adjacent pleats may be sufficient at the expense of a close pressure drop control.

Nevertheless, the drainage element 110 may be provided with openings for receiving the filtrate/permeate which differ in size so as to maintain a pressure differential across the sheet material along the flow path of the non-filtrate which is substantially uniform.

At the outer periphery, adjacent to the end portions 105 of the structural elements 104, additional wedge-shaped drainage parts 112 may be inserted in order to also support the sheet material in these areas. The drainage elements 110 and the wedge-shaped drainage parts 112 may be designed as unitary structures as indicated in Figure 5.

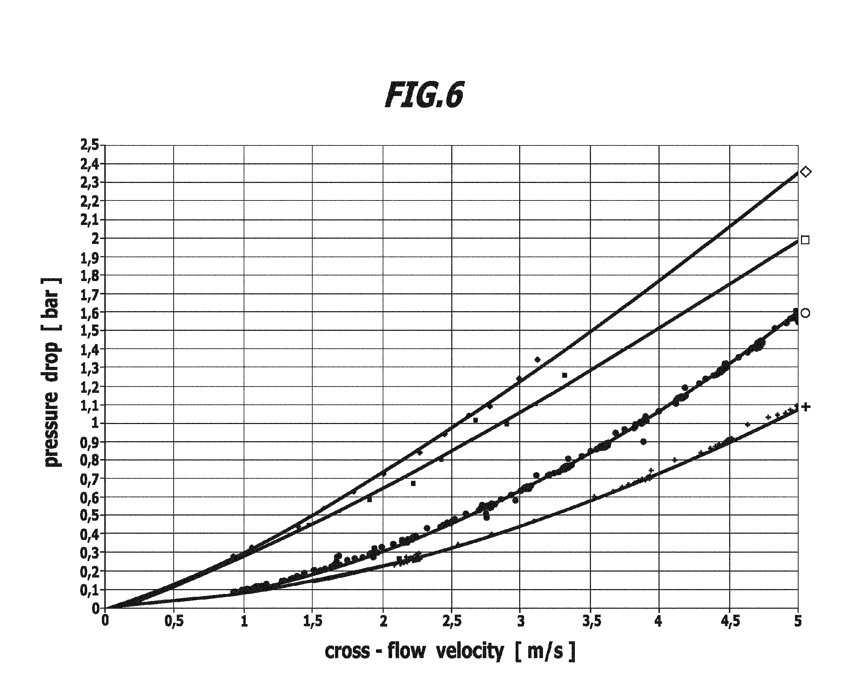

Figure 6 shows a graph with comparative data for two prior art filter elements as well as the filter elements according to the first and second embodiments of the present invention of pressure drop [bar] versus flow velocity [m/s].

The rhomb symbol ◊ represents a filter element of hollow membrane fibers with an inner diameter of 1.5 mm of a first type. The square symbol □ represents the data of a second hollow fiber membrane filter element having an inner diameter of the fibers of 1.5 mm.

The circular symbol o represents the data of the filter element of the first embodiment of an inventive filter element according to Figure 4A when the channels have a uniform depth a₁ of 1.5 mm and at the point of reversal of fluid flow the width d is 3 mm.

The plus symbol + represents the data for a filter element according to the second embodiment of Figure 5 the depth a₂ of the channels being uniformly 1.5 mm.

The filter elements of the present invention tested and represented in Figure 6 included a polyethersulfone membrane having a porosity of about 0.45 µm.

Not only provide the filter elements of the present invention for a remarkably lower pressure drop, but the filter elements further may be readily adapted, e.g., with respect to the channel cross-sections to the varying viscosity of the non-filtrate fluid along the flow path within the filter element.

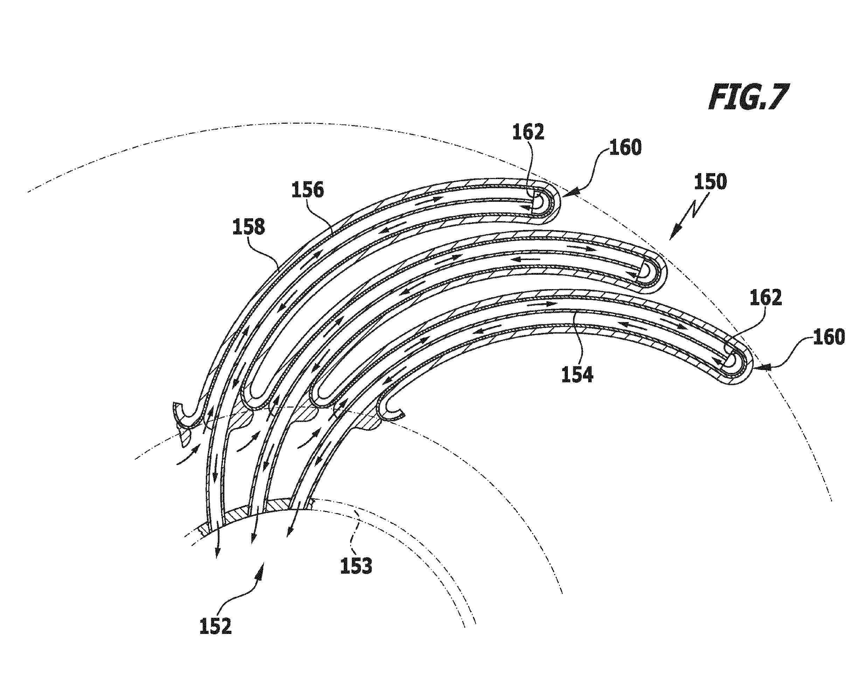

Figure 7 shows a partial cross-sectional representation of a filter element 150 according to a third embodiment of the present invention. In contrast to the first embodiment described above with reference to Figures 2 to 4, the filter element 150 comprises a support body 152 with structural elements 154 which do not extend substantially straight in radial direction from a central tubular support 153 of the filter element 150, but are arranged obliquely to the radial direction and have, in addition, a curved configuration. According to the third embodiment of an inventive filter element 150, the surface area of sheet material 156, which may be accommodated in a filter element of a given diameter, can be increased substantially.

If the surface area of sheet material for a filter element of the first embodiment of a given diameter is set to 100%, the surface area of the third embodiment amounts to about 135%.

The structure of the curved structural elements 154 may be designed such that, similar to the second embodiment, the drainage element 158 need not be rigid, but could be selected from flexible film. Again, one layer of drainage material may be sufficient if pressure control along the fluid flow path of the non-filtrate is of less importance.

At end portions 160 of a pleat, the sheet material 156 is protected on its non-filtrate surface by fluid flow deflecting elements 162. This is of importance especially when the non-filtrate includes particulate matter which could easily lead to an abrasion of the sheet material at the end portions where the flow velocity of the non-filtrate is especially high.

This type of deflecting elements are recommendable also for the filter element of Figure 1 to 4 whereas in the second embodiment of Figure 5, because of the substantially larger radius of the fluid flow at the end portions, the risk of abrasion is substantially lower.

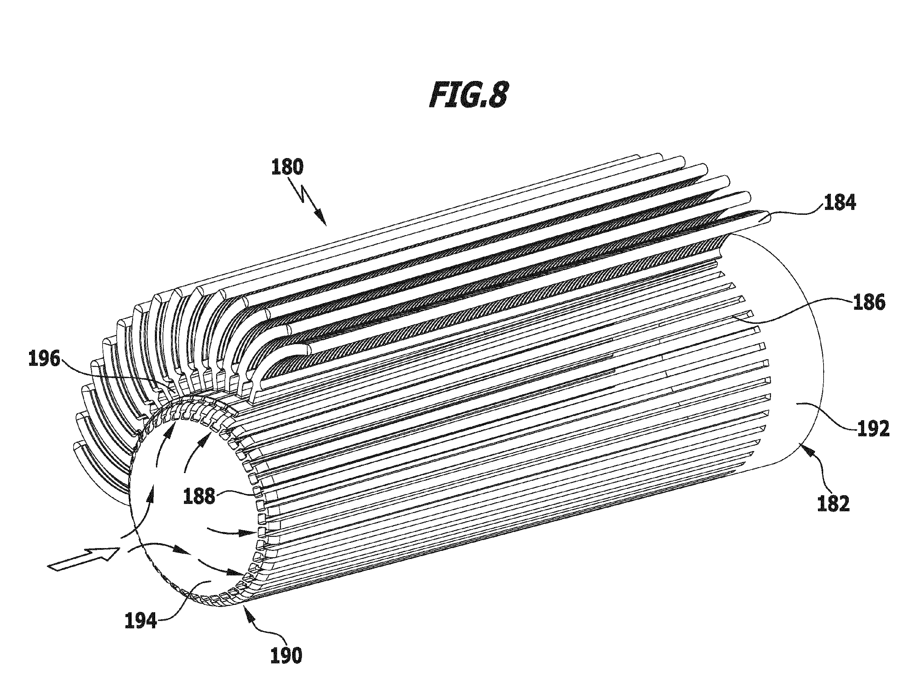

Figure 8 shows a perspective representation of a support body 180 for an inventive filter element 150 according to the third embodiment of the present invention.

In contrast to the first embodiment described above with reference to Figures 1 to 4, the support body 180 of the third embodiment of Figure 8 is not manufactured as a unitary structure, but is composed of a separate central tubular element 182 and a plurality of separate structural elements 184.

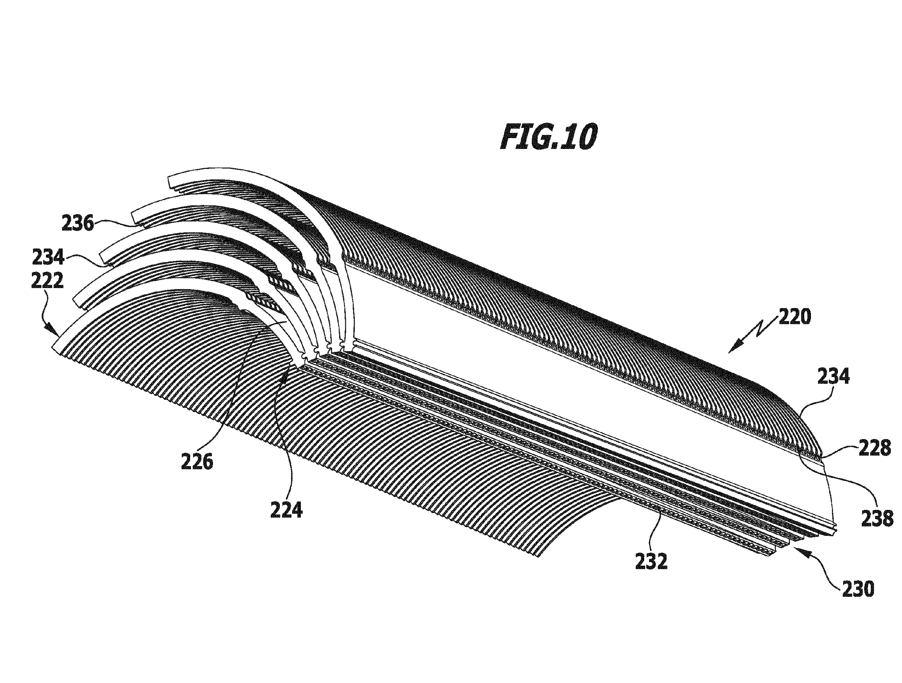

The support body of the second embodiment of Figure 7 may be manufactured as a unitary structure like the first embodiment or with a central tubular element and a plurality of separate structural elements similar to the second embodiment or in accordance with the third embodiment described in connection with Figures 10 to 12 below.

In order to enable an easy assembly of the support body 180, the central tubular element 182 comprises a plurality of longitudinal slots 186, each slot accommodating the innermost end portion 188 of a structural element 184, preferably in a form-fit. The longitudinal slots 186 are open at one end 190 of the central tubular element 182 and closed adjacent to the opposite end 192.

The central tubular element 182 comprises a wall portion 194 closing the end 190 and stabilizing the slotted structure of the tubular element 182 at this end 190. The wall portion 194 at the same time serves to distribute inflowing non-filtrate into a plurality of channels 196 provided in longitudinal direction of the filter element adjacent to the tubular element 182 and in between two adjacent structural elements 184 as schematically indicated by arrows.

The support body 180 may accommodate sheet material and drainage layers as described in connection with Figure 7 in order to complete the filter element.

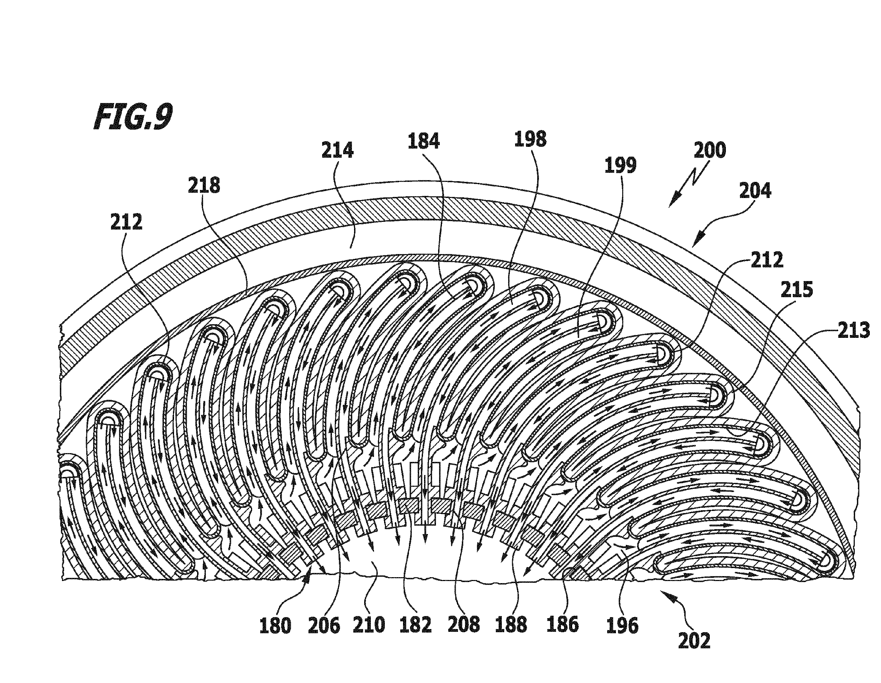

A filter module 200 comprising an inventive filter element 202 provided according to the concept of Figure 8 is shown in Figure 9 in a partial cross-section. The filter module 200 comprises a housing 204 which accommodates the filter element 202.

Non-filtrate is fed into the non-filtrate channels 198, 199 of the individual pleats from the non-filtrate distribution channels 196. At the outer peripheral end of the structural elements 184, the fluid flow of the non-filtrate is reversed and the non-filtrate flows within the channels 199 back in the direction to the tubular element 182. There, the non-filtrate is received by discharge openings 206 connected to ports 208 leading to the space 210 in the interior of the tubular element 180 forming a retentate outlet channel.

At the outermost end of the channels 198, where the non-filtrate fluid flow is deflected, the sheet material is preferably protected from a direct contact with the non-filtrate by deflecting elements 212 which substantially reduce abrasion of the sheet material 213 by particulate matter included in the non-filtrate.

Within the housing 204, the filter element 202 is surrounded by permeate or filtrate space 214 collecting filtrate/permeate from the individual pleats and the draining layers 215 for discharge through a filtrate/permeate outlet (not shown).

At its outer peripheral surface, the filter element 202 comprises a cage type clamping element 218 holding the sheet material 213, the drainage layers 215 and the structural elements 184 together in a predefined orientation.

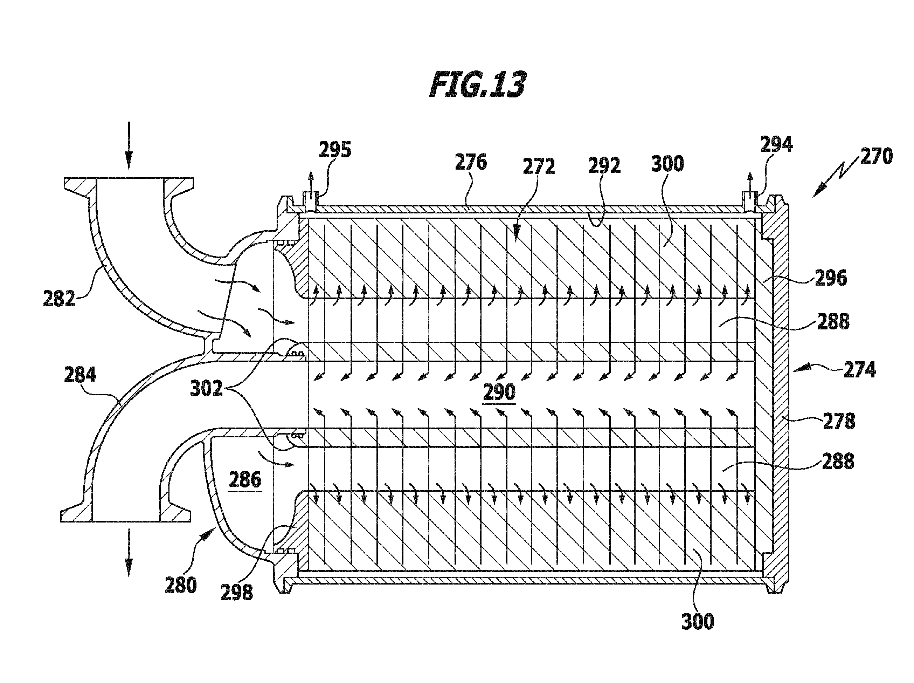

Figure 10 shows a part of a first variant of an alternative support body 220 for a filter element 202 made of a plurality of structural elements 222 which are designed with a form-fit section 224 at their innermost end. When the structural elements 222 with their form-fit sections 224 have been assembled to form a complete support body 220, the form-fit sections 224 altogether form the tubular central structure corresponding in function to the tubular element 182 of the filter element 202 of Figures 8 and 9. In between wall portions of the structural elements 222 adjacent to the form-fit sections 224 channels 226 are formed for distributing the non-filtrate into the pleats. These wall portions in addition include small ducts 228 leading to discharge openings 232 at the interior space 230 of the central structure of the support body 220 serving as part of the retentate receiving arrangement. In the first variant shown in Figure 10 the cross-sectional area of the channels 226 along the axial direction of the support body 220 remains constant. Also, the cross-sectional area of the interior space 230 along the axial direction of the support body remains constant. Such variant is preferred when the filter element is to be accommodated in a housing having the non-filtrate inlet and the retentate outlet configured at the same end thereof as is the case in Figure 13.

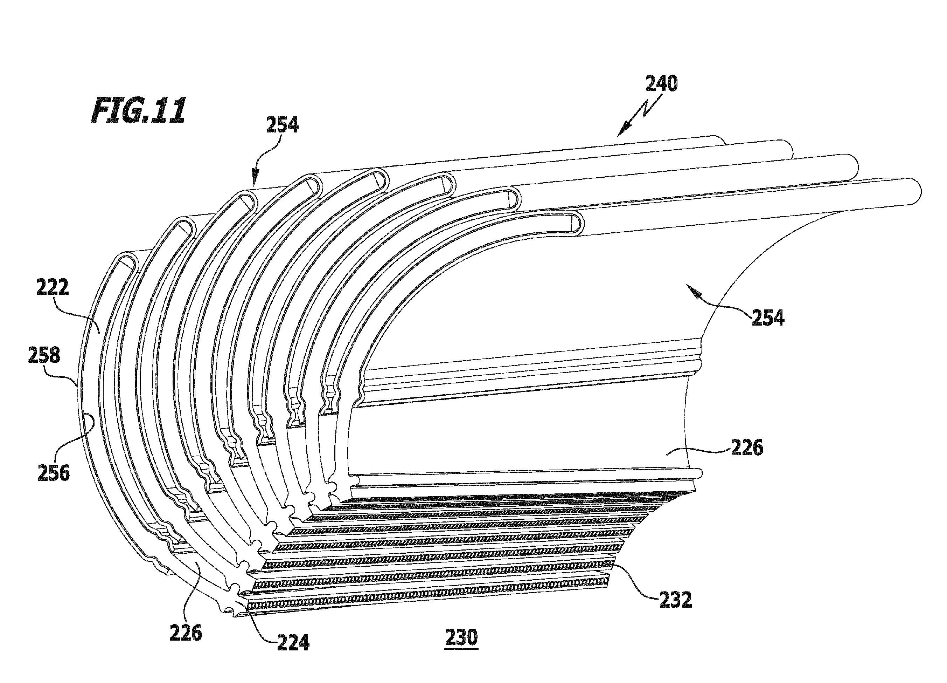

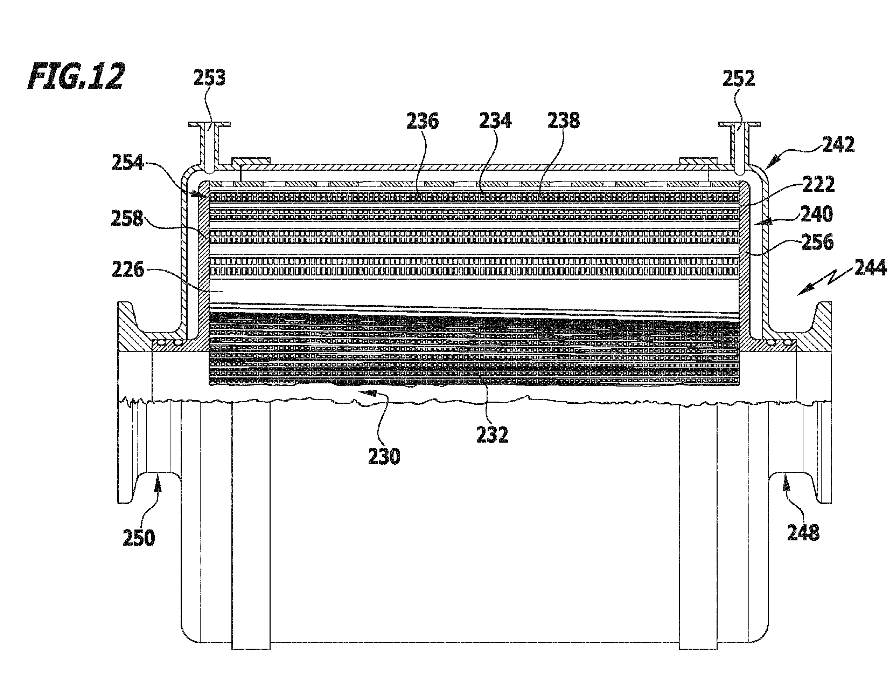

Figures 11 and 12 show a filter element 240 in a partially assembled/cut-off representation. The filter element 240 comprising a second variant of the support body 220 is accommodated in a housing 242 to form a complete filter module 244.

In between two adjacent structural elements 222, a non-filtrate distribution channel 226 is formed adjacent to their form-fit sections 224. The wall portions forming the non-filtrate distribution channels 226 comprise a plurality of radially extending ducts 228 which fluidly connect the interior space 230 of the central structure with discharge openings 232 delivering non-filtrate from the end of the flow path within a pleat as retentate into the space 230 forming a retentate discharge channel.

The structural elements 222 are provided on both sides with longitudinal projections 234 which form channels 236, 238 directing the fluid flow of the non-filtrate from the distribution channels 226 of central structure into the pleats 254, to the outer peripheral end 256 thereof and back to the central structure where the remainder of the non-filtrate is received by the discharge openings as retentate which is discharged through the ducts 228 into the central space 230.

The structural elements 222 may be made of a rigid material. The channels 236, 238 directing the fluid flow along the sheet material 256 within the pleats may be formed with increasing cross-sectional areas as explained in connection with Figure 4B and 4C. At the filtrate/permeate side of the sheet material 256 a supporting drainage layer 258 is provided.

The cross-sectional area of the non-filtrate distribution channels 226 decreases along the length of the second variant of the support body 220 of the filter element. The cross-sectional area of the central retentate channel 230 increases along the axial direction of the second variant of the support body 220 so as to take care of the increasing volume of retentate received along the length of the filter element from the plurality of discharge ducts 228. However, the length of the fluid flow paths within pleats 254 remains constant over the axial length of the filter element and may be, e.g., about 300 mm.

Figure 12 shows the filter module 244 as part of a filter system in a partial cross-sectional representation. The housing 242 comprises at axially opposite ends thereof a non-filtrate inlet 248 and a retentate outlet 250, respectively. The filter module 244 comprises the filter element 240 and at both end faces thereof end-caps 256, 258 which sealingly connect the filter element 240 to the non-filtrate inlet 248 and the retentate outlet 250, respectively.

The increasing diameter of the retentate receiving channel 230 and the decreasing cross-section of the non-filtrate distribution channels 226 within the central tubular structure are apparent from both Figures 11 and 12. The housing in addition comprises two filtrate/permeate outlets 252, 253 at opposite ends.

Figure 13 shows a filter system 270 with a filter module comprising a filter element 272 similar to the first embodiment and a housing 274.

The housing 274 is composed of a cylindrical wall 276 extending substantially along the whole length of the filter element 272. At one end of the filter system 270, the housing 274 is closed by a circular plate 278 which is connected to one end of the cylindrical wall 276 in a fluid-tight manner.

At the opposite end of the cylindrical wall 276 in axial direction, the housing 274 is closed by an adaptor element 280 which includes a non-filtrate feed inlet tube 282 and a retentate collecting and outlet tube 284. The non-filtrate inlet tube 282 feeds the non-filtrate into an annular space 286 from which the non-filtrate enters into non-filtrate distribution channels 288 of the filter element 272.

The retentate discharge tube 284 ends in a central position of the housing 274 and are there connected to a retentate collecting channel 290 receiving the retentate from the individual pleats of the filter element 272.

Filtrate/permeate penetrating the sheet material of the filter element 272 is collected in an annular space 292 between the outer periphery of the filter element 272 and the inner surface of the cylindrical wall 276 of the housing 274.

The cylindrical wall 276 is provided with two filtrate/permeate outlet ports 294, 295 positioned adjacent to the opposite ends of the cylindrical wall 276.

In order to facilitate the accommodation of filter element 272 within the housing 274, the filter element 272 is provided with two end caps 296, 298. The end cap 296 is a circular disc which closes the filter element 272 at one face thereof completely. At the opposite end face of the filter element 272, the end cap 298 closes the filter element 272 in the ring-shaped area of the individual pleats 300 and provides openings 302 to receive non-filtrate from the circular space 286. The openings 302 are in direct fluid communication with the non-filtrate distribution channels 288. The central portion of the end cap 298 serves to fluid-tightly accommodate the end portion of the retentate discharge tube 284 and provide direct fluid communication with the retentate collecting channels 290.

The general structure of the filter element 272 may correspond to the filter element described in connection with Figures 1 to 4, as mentioned before, or may be of a different type as described in connection with Figures 7 to 12. The filter system 270 of Figure 13 with the non-filtrate inlet and the retentate outlet at the same end of the housing 274 does not lend itself to the afore-described features of decreasing the cross-sectional area of the distribution channels and increasing the retentate channel cross-section. However, the cross-sectional area of the channels directing the non-filtrate fluid flow within the pleats still may advantageously have an increasing cross-sectional area as described in connection with Figures 4B and 4C.

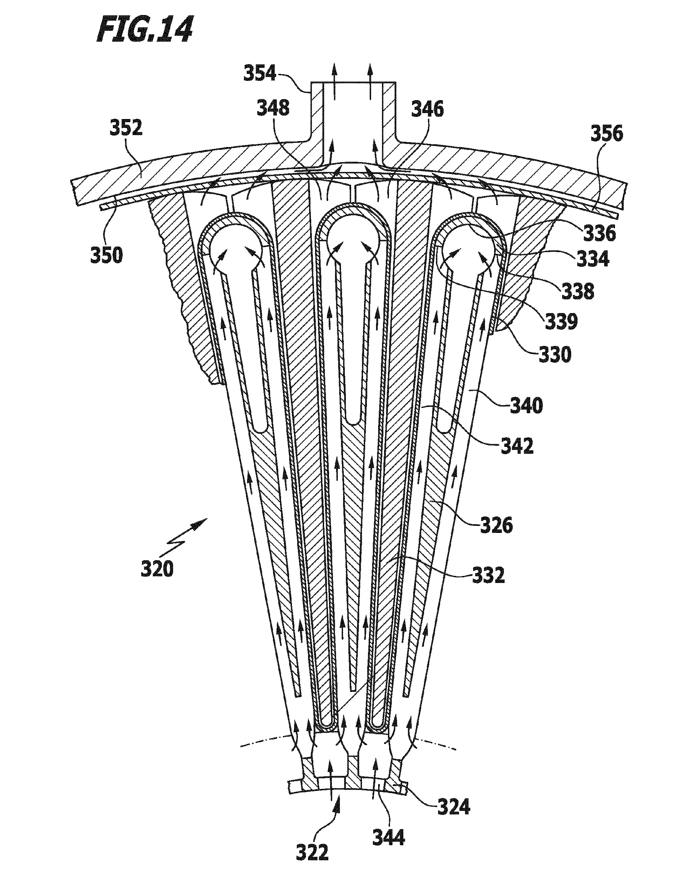

Figure 14 shows a cross-sectional partial representation of a filter system incorporating a fourth embodiment of the filter element of the present invention. The filter element 320 comprises a support body 322 with a central cylindrical support element 324 and a plurality of structural elements 326 radially extending from the central tubular support element 324.

A pleated sheet material 330 contacts the structural elements 326 and is furthermore held in place in between adjacent structural elements 326 by drainage members 332.

While the structural elements 326 are of a marked wedge-shaped configuration in cross-section, the drainage elements 332 have two nearly parallel opposite faces supporting the sheet material 330 in between two adjacent structural elements 326. Indeed, typically there is no gap in between the sheet material 330 and the drainage elements 332.

In contrast to the filter elements described above, the filter element 320 of Figure 14 comprises structural elements 326 which at their outer peripheral end 334 include a channel 336 extending along the whole length of the structural elements 326 and therefore along the whole length of a pleat. The channel 336 has a plurality of openings 338, 339 which provide a fluid communication to flow channels 340, 342 provided on opposite faces of each of the structural elements 326.

The channels 340 and 342 may be provided by longitudinal projections on the surfaces of the structural elements 326 as it has been described in connection with the previous embodiment of the inventive filter element.

The non-filtrate is fed into the central tubular element 324 of the support body 322 and exits that central element 324 through openings 344 from which the fluid enters the pleats of sheet material 330. In contrast to the embodiments discussed above, the fluid flow of the non-filtrate along the opposite surfaces of the structural element 326 flows in the same direction radially outwardly from the central tubular element 324 to the outer peripheral ends 334 on both surfaces of the structural elements 326. At the outer ends of the structural elements 326, the non-filtrate is received as retentate into the channels 336 via the openings 338, 339 from the channels 340 and 342, i.e., the non-filtrate fluid flow is not reversed in its direction.

Upon travelling from the central tubular element 324 to the retentate receiving channel 336, the non-filtrate pressure decreases and therefore, the cross-sectional area of the flow-channels 340, 342 may steadily increase from the radial innermost portion up to the end of the channels terminating at the openings 338, 339 to at least partially cope with the pressure drop by providing a lower fluid flow resistance.

The drainage elements 332, on the other hand, provide a higher fluid flow resistance to the filtrate/permeate at a portion adjacent to the inner tubular element 324 and a lower fluid flow resistance at the outermost end thereof so as to maintain a substantially constant pressure differential across the sheet material 330 all along the non-filtrate flow path in the channels 340, 342.

From the outermost portions of the drainage elements 332, the filtrate/permeate is discharged into filtrate/permeate collecting channels 346, 348 from where it is collected in an annular filtrate/permeate collecting space 350 formed in between the filter element 320 and a cylindrical wall 352 of a housing (not shown in detail). The cylindrical wall 352 comprises a filtrate/permeate outlet port 354 through which filtrate/permeate may be withdrawn from the filter module.

The advantage of this embodiment of the present invention is that the fluid flow path for the non-filtrate from the feed or distribution channels adjacent to the central tubular element 324 of the support body 322 to the retentate discharge channel 336 is about half only such that the fluid flow and the pressure drop across the membrane 330 may be controlled even closer.

In addition, as mentioned before, there is no need to deflect the fluid flow of the non-filtrate such that the particulate matter contained in the non-filtrate will not give rise to abrasion of the sheet material 330 which preferably at the outer end of the pleats abuts at the outermost portion 334 of the structural element 326 and is therefore protected from any impact of particulate matter eventually comprised in the non-filtrate.

The drainage elements 332 may be designed to abut one another at the outer periphery of the filter element 320 where they are held together by straps 356.

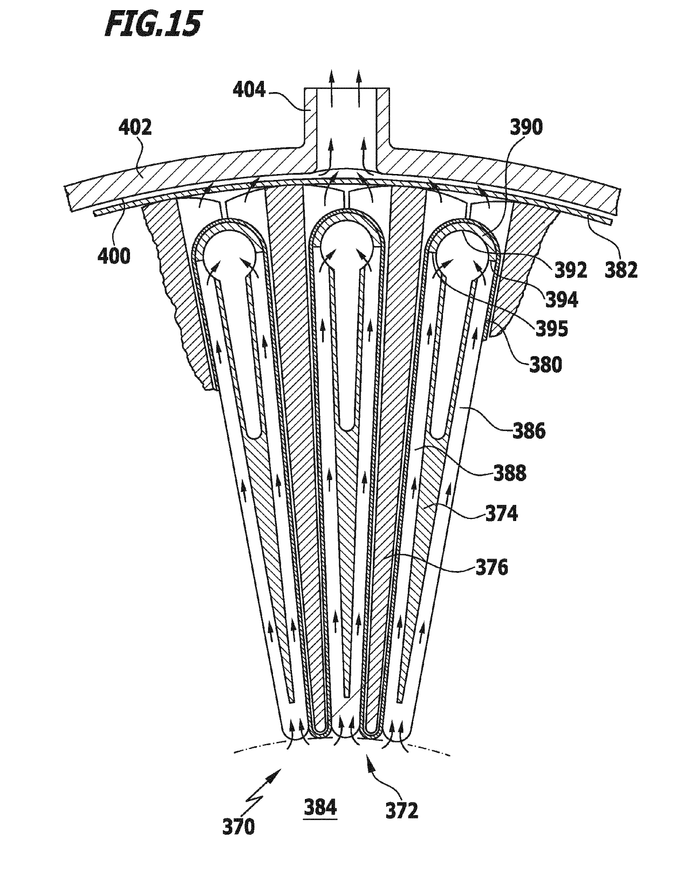

Figure 15 shows a filter system comprising a variant of the embodiment of the filter element shown in Figure 14. The filter element 370 comprises a support body 372 which mainly consists of individual wedge-shaped structural elements 374 only. The structural elements 374 are no longer attached to a central tubular support element, but are accommodated within a pleat and held at a predefined distance from one another by drainage elements 376 which support a sheet material 380 which is arranged in the same way in pleats as it has been described in connection with Figure 14.

The structure of the individual structural elements 374 lined with the sheet material 380 and spaced apart by wedge-shaped drainage elements 376 is fixed by a strap or cage 382 which runs along the outer peripheral surface of the filter element 370 and holds the individual parts of drainage elements 376 and structural elements 374 lined with the sheet material 380 together. Again, the drainage elements 376 may be designed to abut one another at the outer periphery of the filter element 370.

The fluid flow of the non-filtrate distributes from a central portion 384 of the filter element 370 into channels 386, 388 on the opposite surface of the structural elements 374 which again typically are formed by longitudinal projections running from the innermost portion of the support element 374 to their outer peripheral end 390. As is the case with the embodiment of Figure 14, the non-filtrate is distributed into the channels 386, 388 and flows only in one direction, i.e., from the inner central space 384 of the filter element 370 radially outwardly along the channels 386 and 388 up to the outermost part 390 of the structural elements 374 where a channel 392 is provided to collect the remaining non-filtrate as retentate. To that extent, the channel 392 is provided with openings 394, 395 which allow fluid communication of the channels 386 and 388 and the retentate receiving channel 392.

Filtrate/permeate is collected via the drainage elements 376 and travels radially outwardly to a retentate collecting space in the form of an annular space 400 in between a wall portion 402 of a housing (not shown in detail) and the outer periphery of the filter element 370 which here is defined by the tension strap or cage structure 382.

The wall portion 402 comprises a filtrate/permeate outlet port 404 through which filtrate/permeate may be discharged from the filter module.

Both filter elements of Figures 14 and 15 have a reduced cross-sectional area of their components at the innermost ends of the pleats as compared to filter elements of the first, second and third embodiment. Consequently, the number of pleats may be increased as compared to a filter element according to any one of Figures 1 to 12 by about 12%. The surface area provided as compared to a filter element of the first embodiment amounts to about 105% since part of the sheet material 330, 380 is covered and shielded by the outermost part 334, 390 of the structural elements 326, 374.

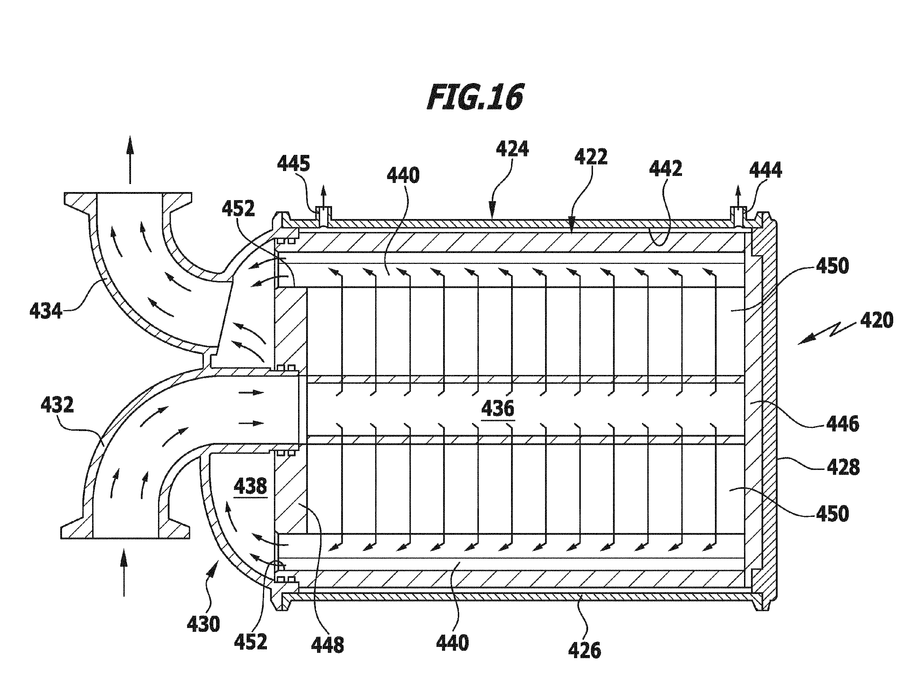

Figure 16 illustrates a filter system 420 comprising a filter element 422 within a housing 424.

The housing 424 is composed of a cylindrical wall 426 extending substantially along the whole length of the filter element 422. At one end of the filter system 420, the housing 424 is closed by a circular plate 428 which is connected to one end of the cylindrical wall 426 in a fluid-tight manner.

At the opposite end of the cylindrical wall 426 in axial direction, the housing 424 is closed by an adaptor element 430 which includes a non-filtrate feed inlet tube 432 and a retentate collecting and outlet tube 434. The non-filtrate inlet tube 432 discharges the non-filtrate into a central tubular space 436 which serves as a non-filtrate distribution channel of the filter element 422.

The retentate discharge tube 432 ends in a circular retentate collecting space 438 which is fluidly connected to the retentate collecting channels 440 receiving the retentate from the individual pleats of the filter element 422.

Filtrate/permeate penetrating the sheet material of the filter element 422 is collected in an annular space 442 between the outer periphery of the filter element 442 and the inner surface of the cylindrical wall 426.

The cylindrical wall 426 is provided with two filtrate/permeate outlet ports 444, 445 positioned adjacent to the opposite ends of the cylindrical wall 426.

In order to facilitate accommodation of the filter element 422 within a standard housing 424, the filter element 422 is provided with two end caps 446, 448 at the opposite end faces thereof. The end cap 446 is a circular disc which fully closes the filter element 422 at one face thereof. At the opposite end face of the filter element 422, the end cap 448 closes the face of the filter element 422 in a ring-shaped area of the individual pleats 450 and provides openings 452 to discharge retentate into the circular space 438. The central portion of the end cap 448 serves to fluid-tightly accommodate the end portion of the non-filtrate feed tube 432 connecting it to the central tubular space 436.

The general structure of the filter element 422 may correspond to the filter element described in connection with Figure 15.

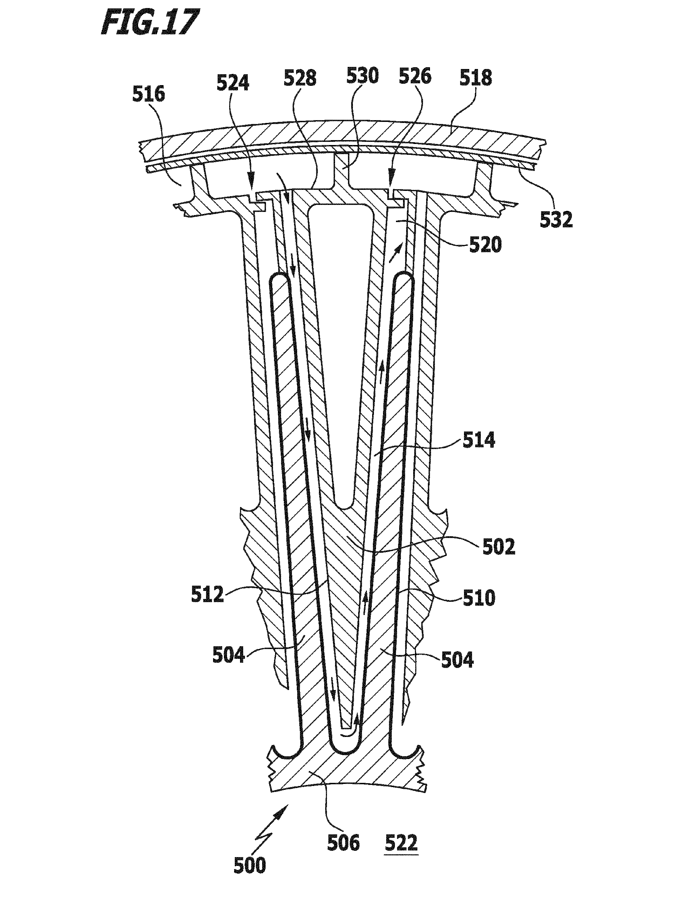

Figure 17 shows a filter system in a partial cross-section including an inventive filter element according to a fifth embodiment. The filter element 500 comprises a plurality of structural elements 502 of a wedge-shaped cross-section.

In contrast to the embodiments of the inventive filter element discussed above, in the filter element 500, the non-filtrate channels defined by the structural elements 502 extend from the outer periphery of the filter element 500 to the center thereof and back to the outer periphery.

In between two adjacent structural elements 502, drainage elements 504 are positioned extending from a fluid pervious common central tubular support 506 outwardly in radial directions. The fluid pervious drainage elements 504 support a sheet material (e.g., a membrane) 510 in a position which is substantially in parallel to surfaces of two adjacent structural elements 502.

The structural elements 502 are provided with longitudinal projections running in radial direction, thereby creating channels 512, 514. The channels 512 radially direct the non-filtrate fluid flow from the outer periphery of the filter element 500 to the center thereof where it is deflected and redirected in its fluid flow to the outer periphery via channels 514.

The non-filtrate is supplied to the individual pleats and the channels 512, 514 from an annular space 516 created at the outer periphery of the filter element 500 and limited by a cylindrical wall 518 of a housing (not shown in detail) of a filter module. From the annular space 516, the non-filtrate is distributed into the channels 512 of each pleat. The non-filtrate returning via channels 514 in the direction to the outer periphery of the filter element 500 is collected in retentate receiving channels 520 running close to the outer periphery of the filter element in parallel to its axial direction.

The structural elements 502 are provided at their outer peripheral portion with side faces 524, 526 which cooperate with the side faces 524, 526 of the adjacent structural elements 502. Furthermore, at their outer peripheral surfaces 528, the structural elements comprise radially projecting spacer elements 530 which keep the filter element 500 at a distance to the housing 518 such that the annular space 516 serving as non-filtrate supply channel has a regular open cross-section.

Filtrate/permeate penetrating through the sheet material 510 is collected in the fluid pervious drainage elements 504 from where it exits the pleated structure of filter element 500 into a central volume 522 collecting the filtrate/permeate from all the individual pleats of the filter element 500.

At the outer periphery, a tension strap or cage 532 is provided which abuts the spacer elements 530 and firmly holds the individual parts of the filter element 500 together, i.e., the structural elements 502, the drainage elements 504 with its central support structure 506 and the sheet material 510.

The non-filtrate inlet may be provided at one end face of the filter module 500, whereas the retentate channels 520 are discharged in a common retentate collecting space at the other face of the filter element 500. Filtrate/permeate is collected from the central space 522 of the filter element by a separate outlet port of the housing.

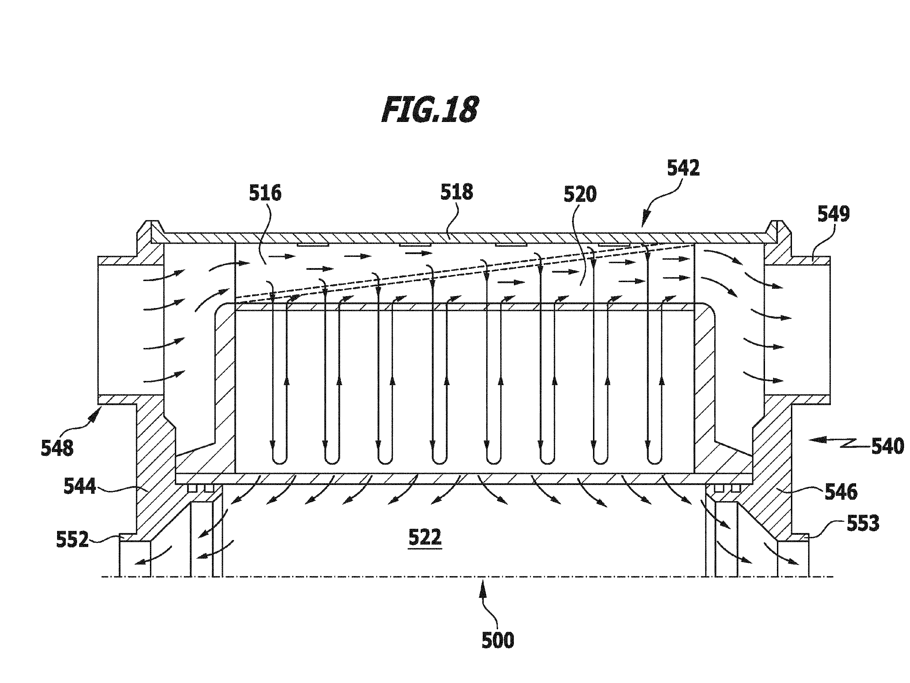

This is demonstrated in some more detail in Figure 18 which shows a filter module 540 accommodating a filter element 500 as described in connection with Figure 17.

The filter module 540 comprises a housing 542 with a cylindrical wall 518 as well as two disc-like closure elements 544, 546 covering the axial end portions of the cylindrical wall 518 and closing the space within the cylindrical wall 518.

The closure element 544 includes an off-center port 548 which serves as a non-filtrate inlet from which the non-filtrate is supplied into the interior annular space 516 of the housing 542. As is shown in Figure 18, the non-filtrate fluid flow distributes from the annular space 516 into the individual pleats of the filter element 500 from the outer periphery thereof into the filter module where it is deflected and returns to the outer periphery where it is collected by the retentate receiving channels 520.

The second closure 546 covers an end face of the cylindrical wall 518 and comprises an off-center outlet port 549 which receives the retentate from the retentate channels 520.

As indicated in Figure 18, the annular space 516 distributing the non-filtrate into the individual pleats may be of a conical shape so that the cross-sectional area of the space 516 remote from the inlet port 548 is smallest, whereas close to the inlet port 548, the cross-sectional area is maximized.

Thus, the cross-sectional area of the annular space 516 is adapted to the lower amount of non-filtrate fluid received during operation of the filter module because of the distribution of the same into the various pleats of the filter element 500.

In contrast, the retentate receiving channels 520 have an increasing cross-sectional area starting from the non-filtrate feed end of the filter module 500 in the direction to the retentate discharge end of the same.

The central portion of the filter element defines a central tubular space 522 for receiving filtrate/permeate from the individual pleats, i.e., the drainage elements in between adjacent pleats, and the closure elements 544, 546 may both or only one of them have an outlet port for discharging the filtrate/permeate. In the embodiment of Figure 18, both of the closing structures 544, 546 have an outlet port 552, 553 for filtrate/permeate collected in the tubular space 522.

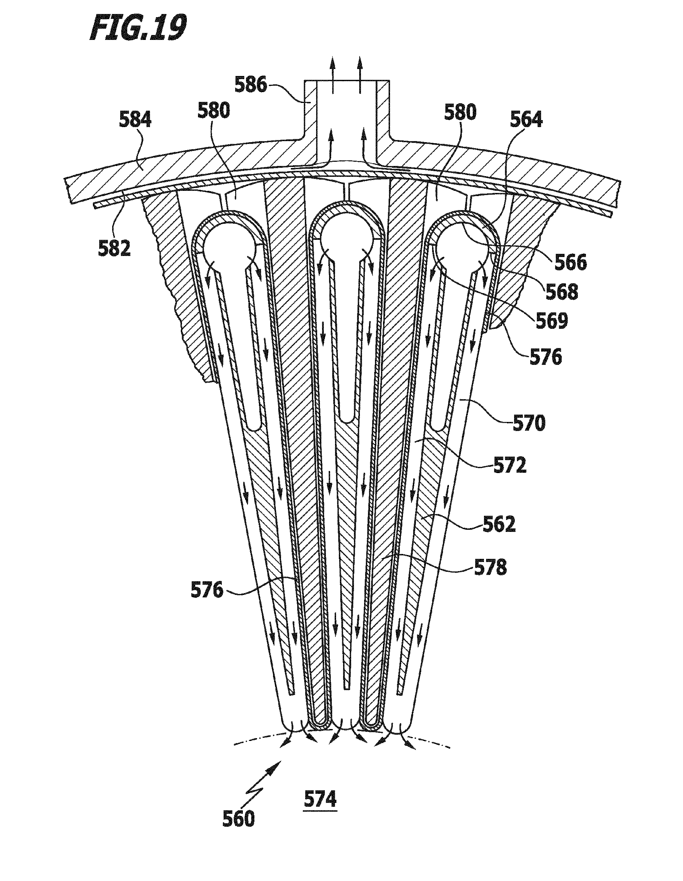

Figure 19 relates to a filter system incorporating a sixth embodiment of an inventive filter element 560. The filter element 560 has a design of its individual parts closely related to the filter element 370 of Figure 15, but fluid flow is in opposite direction.

The filter element 560 comprises a plurality of wedge-shaped structural elements 562 providing at their outer peripheral end 564 non-filtrate distribution channels 566. Openings 568, 569 allow the non-filtrate to exit the distribution channels 566 and enter radially extending non-filtrate channels 570, 572 extending from the outer peripheral end of a structural element 562 on both surfaces thereof to a central tubular space 574 of the filter element 560 collecting the non-filtrate as retentate.

The non-filtrate channels 570, 572 are lined with porous sheet material 576 which is supported on its filtrate/permeate surface by fluid pervious drainage elements 578. Fluid permeating the sheet material 576 is migrating within the drainage elements 578 to the outer periphery of the filter element 560 where it is collected infiltrate/permeate channels 580 and discharged to an annular space 582 in between the outer periphery of the filter element 560 and a wall 584 of housing. The wall 584 comprises a filtrate/permeate outlet 586 through which filtrate/permeate may be discharged from the filter module.

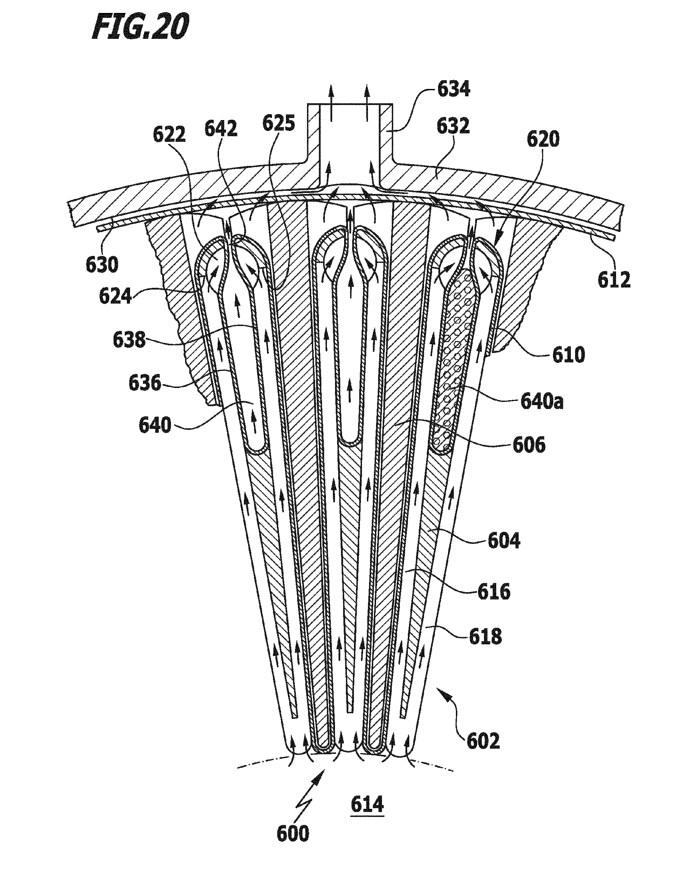

Figure 20 shows a seventh embodiment of an inventive filter element 600. The filter element 600 has a basic design similar to the filter element 370 of Figure 15 and comprises a support body 602 which mainly consists of individual wedge-shaped structural elements 604 only. The structural elements 604 are not attached to a central tubular supporting element, but are accommodated within pleats of sheet material 610 and held at a predefined distance from one another by wedge-shaped drainage elements 606 which in addition support the sheet material 610.

The individual structural elements 604 are lined with the sheet material 610 and spaced apart by the drainage elements 606 fixed by a tension strap or cage 612 running around the outer periphery of the filter element 600 and holding the individual parts, i.e., the drainage elements 606 and the structural elements 604 lined with the sheet material 610, together.

The fluid flow of the non-filtrate is distributed from a central tubular portion 614 of the filter element 600 into channels 616, 618 on opposite surfaces of the structural elements 604 which again typically are formed by longitudinal projections running from the innermost portion of the support element 604 to their outer peripheral ends 620. The non-filtrate distributed into the channels 616, 618 flows only in one direction, i.e., from the inner central space 614 of the filter element 600 radially outwardly along the channels 616 and 618 up to the outermost part 620 of the structural elements 614 where a channel 622 is provided to collect the remaining non-filtrate as retentate. To that extent, the channel 622 is provided with openings 624, 625 which allow fluid communication of the channels 616 and 618 and the retentate receiving channel 622.

Filtrate/permeate is collected via the fluid pervious drainage elements 606 and travels radially outwardly to a filtrate/permeate collecting space in the form of an annular space 630 in between a wall portion 632 of a housing (not shown in detail) and the outer periphery of the filter element 600 which here is defined by the tension strap or cage structure 612. The wall portion 632 comprises a filtrate/permeate outlet port 634 through which filtrate/permeate may be discharged from the filter module.

In addition to such structure known already from Figure 15, the filter element 600 of Figure 20 comprises additional sheet material surface areas 636, 638 which may be formed unitary with the sheet material 610. The surface areas 636, 638 extend from the outer peripheral end 620 of the structural element 604 into the interior space between the channels 616, 618 in radial direction and spaced apart of and substantially parallel to the sheet material 610 of a pleat. The surface areas 636, 638 extend for example about half of the length of the structural element in radial direction thereby increasing the surface area of the sheet material of a pleat by about 50%.

The sheet material areas 636, 638 are in direct contact with the fluid flow within channels 616, 618 and allow filtrate/permeate to pass through into a channel-like space 640 in between the surface areas 636, 638. In order to collect the filtrate/permeate from the space 640 between the surface areas 636, 638, they are kept spaced apart from each other, preferably by drainage elements. An example for such draining elements is shown as a porous structure 640a on the right hand side of the Figure 20. At the outer peripheral end of the space 640, a gap 642 is provided through which the filtrate/permeate may exit and enter into the annular space 630.

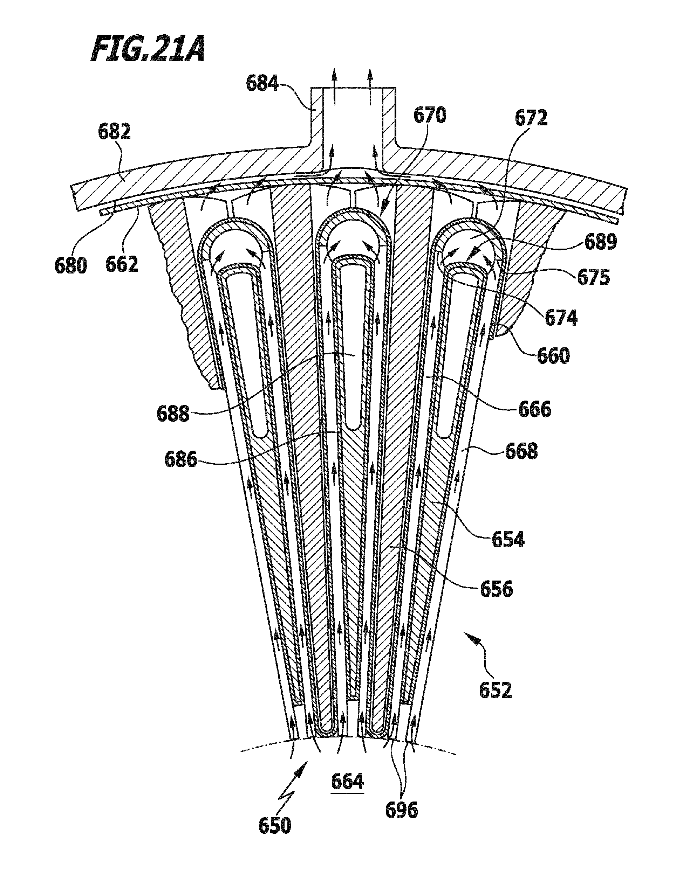

Figure 21A shows a filter system with still another modification of the filter element of Figure 15. The filter element 650 as an eighth embodiment of an inventive filter element has a basic design similar to the filter element 370 of Figure 15 and comprises a support body 652 which mainly consists of individual structural elements 654 only. The structural elements 654 are not attached to a central tubular supporting element, but are accommodated within pleats of sheet material 660 and held at a predefined distance from one another by fluid pervious drainage elements 656 which in addition support the sheet material 660.

The individual structural elements 654 lined with the sheet material 660 and spaced apart by the drainage elements 656 are fixed by a tension strap or cage 662 which runs around the outer periphery of the filter element 650 and holds the individual parts, i.e., the drainage elements 656 and the structural elements 654 lined with the sheet material 660, together.

The fluid flow of the non-filtrate is distributed from a central portion 664 of the filter element 650 into channels 666, 668 on opposite surfaces of the structural elements 654 which run from the innermost portion of the support elements 654 to their outer peripheral ends 670. The non-filtrate distributed into the channels 666, 668 flows only in one direction, i.e., from the inner central space 664 of the filter element 650 radially outwardly along the channels 666 and 668 up to the outermost part 670 of the structural elements 654 where a channel 672 is provided to collect the remaining non-filtrate as retentate. To that effect, the channel 672 is provided with openings 674, 675 which allow fluid communication of the channels 666 and 668 and the retentate receiving channel 672.

Filtrate/permeate is collected via the drainage elements 656 and travels radially outwardly to a retentate collecting space in the form of an annular space 680 in between a wall portion 682 of a housing (not shown in detail) and the outer periphery of the filter element 650 which here is defined by the tension strap or cage structure 662. The wall portion 682 comprises a filtrate/permeate outlet port 684 through which filtrate/permeate may be discharged from the filter module.

In addition to such structure known already from Figure 15, the structural elements 654 of the filter element 650 of Figure 21A are lined with further sheet material 686 and made of a fluid pervious material so that they may act as drainage elements as well. In their body, a further filtrate/permeate collecting channel 688 is formed running in parallel to channel 672. The additional sheet material 686 accommodated within each pleat may extend substantially over the complete height of the structural elements 654 thereby increasing the surface area of sheet material per pleat to about the double.

The fluid flow within channels 666, 668 is in direct contact on two sides of the channel with sheet material 660 and 638, respectively, allowing filtrate/permeate to pass through both into a channel-like space 688 within the structural elements 654 and into the drainage elements 656.

The filter element 650 may be provided with one single non-filtrate channel 666, 668 on each side of the structural elements 654 extending across the whole length of the individual pleats.

More preferably, however, a plurality of non-filtrate channels 666, 668 is provided on each side of the structural elements 654 directing the non-filtrate fluid flow from the interior ends of the pleats to the exterior ends thereof as it has been described in connection with the afore-going embodiment.

The surface of the structural elements 654 is, however, lined with the second sheet material 686 such that the structural elements 654 may not be provided with longitudinal projections or ribs as is preferably the case in the other embodiments described.

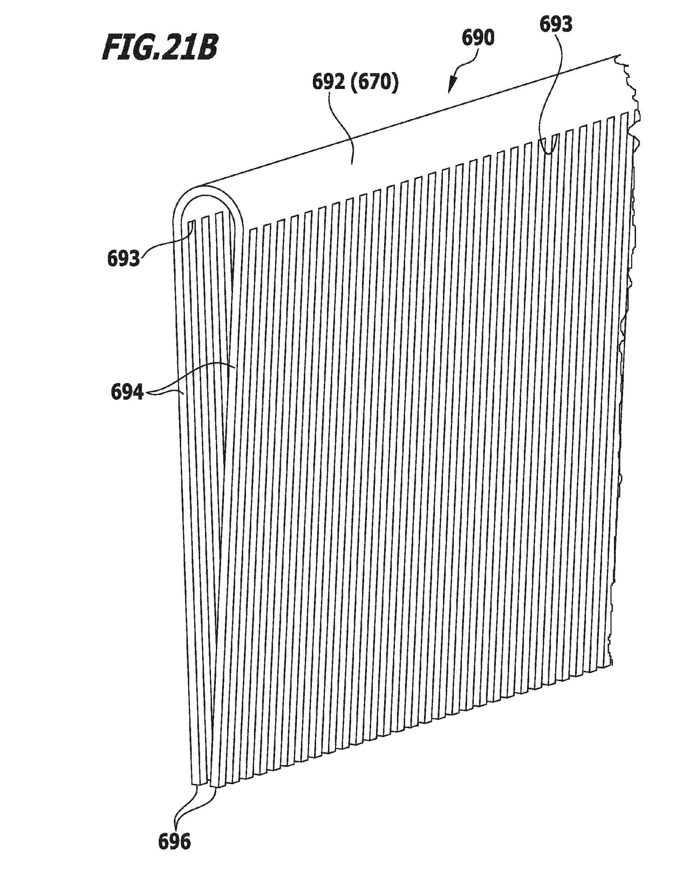

Instead, an auxiliary guiding element or insert 690 may be used as shown in Figure 21B. The guiding element 690 consists of an about half cylindrical body 692 extending along the whole length of a pleat in axial direction of a filter element. From two parallel faces 693 of the body 692, a plurality of rods or spikes 694 which act as separating walls to define a plurality of parallel non-filtrate channels within the pleats. The guiding element 690 may be inserted in a pleat of filter element 650 the half cylindrical body 692 resting on the upper inner end 689 of the structural element 654 lined with sheet material 686.

In an alternative embodiment the half cylindrical body 692 may be identical with the outer peripheral end 670 of a structural element 654 and the spikes 694 depending therefrom.

The free ends 696 of the spikes 694 will be stabilized in their respective position once the filter element 650 has been fully assembled and the cage 662 is in place.

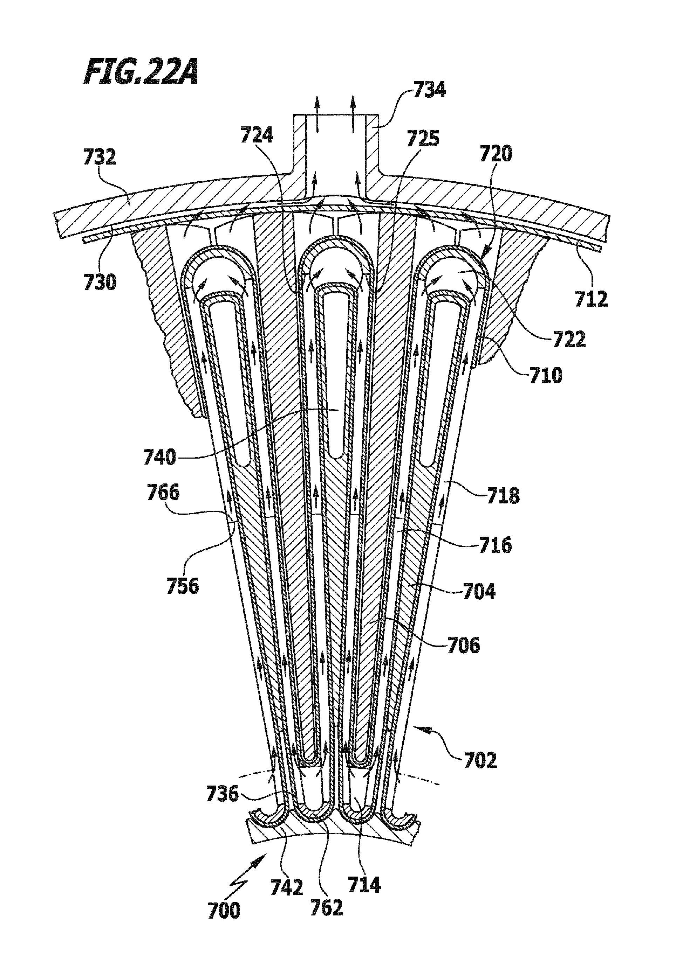

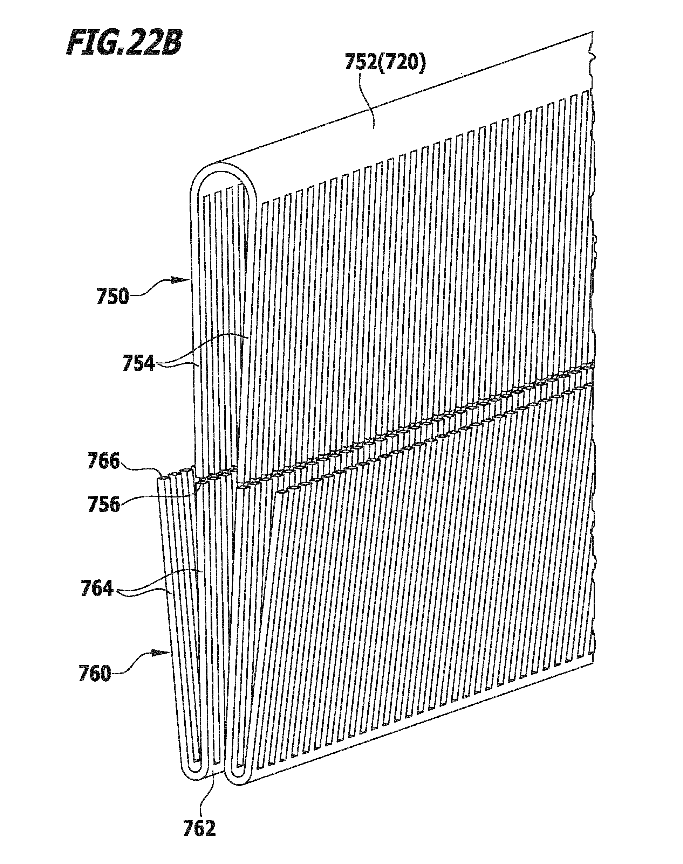

Figure 22A shows a ninth embodiment of a filter element according to the present invention. The basic structure again corresponds to the embodiment shown in Figure 15.

The filter element 700 comprises a support body 702 which mainly consists of individual structural elements 704 only. The structural elements 704 are not attached to a central tubular supporting element, but are accommodated within pleats of a first sheet material 710 and held at a predefined distance from one another by fluid pervious drainage elements 706 which in addition support the sheet material 710.

The individual structural elements 704 lined with the sheet material 710 and spaced apart by the drainage elements 706 are fixed by a tension strap or cage 712 which runs around the outer periphery of the filter element 700 and holds the individual parts, i.e., the drainage elements 706 and the structural elements 704 lined with the sheet material 710, together.

The non-filtrate is distributed into non-filtrate channels 716, 718 on opposite surfaces of the structural elements 704 which run from the innermost portion of the structural elements 704 to their outer peripheral ends 720. The non-filtrate distributed into the channels 716, 718 flows only in one direction, i.e., from the innermost ends of the structural elements 704 of the filter element 700 radially outwardly along the channels 716 and 718 up to the outermost part 720 of the structural elements 704 where a channel 722 is provided to collect the remaining non-filtrate as retentate. To that effect, the channel 722 is provided with openings 724, 725 which allow fluid communication of the channels 716 and 718 and the retentate receiving channel 722.

Filtrate/permeate is collected via the drainage elements 706 and travels radially outwardly to a retentate collecting space in the form of an annular space 730 in between a wall portion 732 of a housing (not shown in detail) and the outer periphery of the filter element 700 which is defined by the tension strap or cage structure 712. The wall portion 732 comprises a filtrate/permeate outlet port 734 through which filtrate/permeate may be discharged from the filter module.

In addition to such structure substantially known from Figure 15, the filter element 700 of Figure 22A comprises an additional or second sheet material 736 which is about coextensive with the sheet material 710 a pleat in pleat structure.

The second sheet material 736 extends substantially from the retentate channel 722 of a pleat at the outer peripheral end 720 of the structural element 704 into the interior in radial direction, spaced apart of and substantially parallel to the first sheet material 710 of a pleat. The sheet material 736 defines with its innermost pleated sections channels 714 which serve as non-filtrate distribution channels from which the non-filtrate is fed into the non-filtrate channels 716, 718. The innermost pleated sections of the sheet material forming the non-filtrate channels 714 abut a central support body 742.

The surface area of the first and second sheet material amounts to about the double of the surface area of the filter element of Figure 15.

The second sheet material 736 is in direct contact with the fluid flow within channels 716, 718 and allows filtrate/permeate to pass through into a channel-like space 740. In order to collect filtrate/permeate via the space 740, the structural elements 704 are designed fluid pervious and act as drainage elements.

As explained in the context of the embodiment of Figure 21A also in the filter element 700 of Figure 22A the non-filtrate channels 716, 718 within the individual pleats may be designed as one single channel extending along the whole length of a pleat in axial direction of the filter element 700.

Preferably however the filter element 700 includes a plurality of parallel channels 716 and 718 separated by longitudinal elements.

Since the structural elements 704 are lined with sheet material 736 the surfaces of the same cannot be used to support such longitudinal elements. Instead, similarly as in case of the filter element 650 of Figure 21A inserts 750, 760 may be used comprising half cylindrical support bodies 752 and 762, respectively, from which depends or extends a plurality of rods or spikes 754 and 764, respectively.

The half cylindrical support body 752 of insert 750 is accommodated at the outer peripheral end portion 720 of a pleat, the spikes 754 projecting inwards, e.g., about half way of the radial length of the non-filtrate channels 716, 718.

The other insert 760 is inserted with its half cylindrical body 762 at the inner most end of the pleats contacting with their outer surface the sheet material 736 at the non-filtrate distribution channels 714 thereby stabilizing the configuration of the sheet material 736 in such area.

The spikes 764 extend from the body 762 radially outwardly into the channels 716, 718 of two adjacent pleats for about half the length of the non-filtrate flow path.

The length of the spikes 754 and 764 is selected such that their inner/outer free ends 754, 766 meet when both inserts are in place and the filter element 700 is fully assembled. Again in such state the spikes are secured in their position.

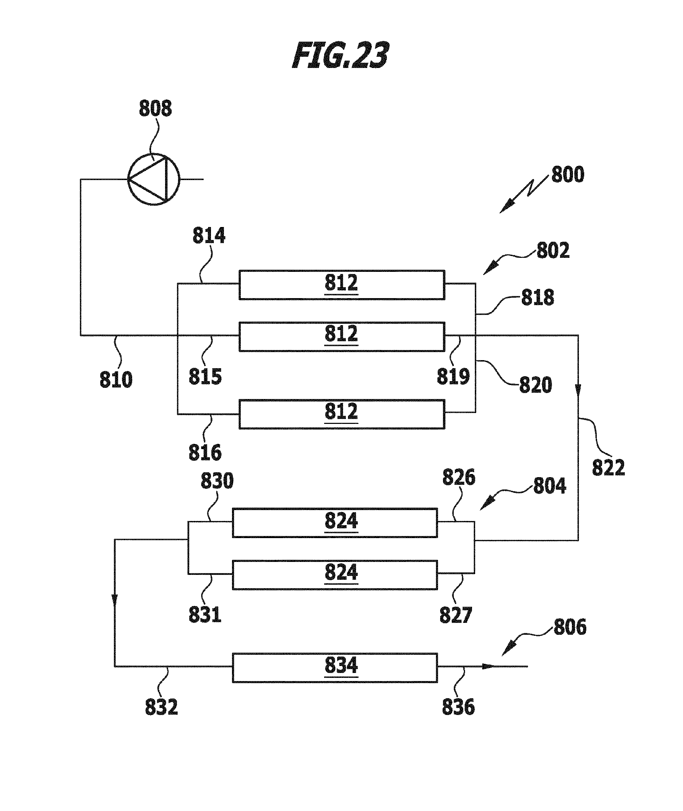

Figure 23 is a block diagram of a multi-stage single pass filtration system 800 as disclosed in US 7,384,549 B2. Such a single pass filtration system 800 represents one of a large number of diverse filtration systems where the filter elements of the present invention may be incorporated.

The system 800 of Figure 23 comprises three filtration stages 802, 804 and 806. The non-filtrate fluid is fed to the first stage 802 by a pressure device or pump 808 via feed line 810. The first stage 802 may consist of three filter elements 812 which receive in parallel arrangement the non-filtrate from line 810 via individual supply lines 814, 815, 816 connected to the non-filtrate inlet of the filter elements 812.

The filter elements 812 are connected with their retentate outlets to individual discharge lines 818, 819, 820 which merge into a single line 822 serving as a non-filtrate supply line for the second filtration stage 804. The second filtration stage 804 comprises two filter elements 824 reflecting the decreased fluid throughput at this stage due to filtrate/permeate collected from filter elements 812 of the first stage.

The retentate of the first stage 802 serves as non-filtrate for the second stage and is fed into the filter elements 824 via individual supply lines 826, 827. The retentate from the filter elements 824 is collected by individual discharge lines 830, 831 which merge into a single non-filtrate supply line 832 for the last stage 806 represented by filter element 834. The retentate of the second stage 804 serves as non-filtrate for the third stage 806. The retentate discharged from filter element 834 is collected by the retentate line 836.

For simplicity reasons, the filtrate/permeate lines receiving filtrate from filtrate/permeate outlets of the filter elements 812, 824 and 834 have been omitted in the representation of Figure 23.

The filter elements of the present invention can easily be adapted to the changing quality, e.g., viscosity, of the non-filtrate received by the various stages 802, 804, 806, e.g., by varying the cross-sectional areas of the non-filtrate channels within the individual pleats of the filter elements in order to optimize the flow conditions of the system.

While in the foregoing description of preferred embodiments in connection with the Figures 1 to 22 filter elements or filter systems were described which are specifically fit for cross-flow filtration the invention is not limited thereto.

Some of the embodiments may qualify for dead-end filtration with some minor modifications. The embodiments of Figures 14, 15, 19, 20, 21A and 22A are ready for dead-end filtration without any modifications. Indeed non-filtrate can be provided via the regular non-filtrate fluid supply arrangement (e.g., the central portion 384 in Figure 15) and simultaneously via the retentate receiving arrangement (e.g., the channel 392 in Figure 15).

## Claims

1. A filter element comprising
- a porous sheet material having a non-filtrate side and a filtrate side, said sheet material being arranged in a plurality of pleats extending in a longitudinal direction, each pleat having a first and second wall portion extending perpendicular to said longitudinal direction from a first, open end to a second, closed end of the pleats, the first and second wall portions being spaced apart from one another,
- a non-filtrate fluid supply arrangement extending along the longitudinal direction of the pleats, wherein said fluid supply arrangement is in fluid communication with the first or second end of each pleat substantially along the whole length of the pleat, said fluid supply arrangement being provided with openings designed to provide a fluid flow from the supply arrangement into the pleats in a direction substantially perpendicular to the longitudinal direction thereof.

2. The filter element of claim 1, further comprising a plurality of structural elements positioned within the pleats at the non-filtrate side of the sheet material and directing the non-filtrate in fluid flow paths along the first and second wall portions of the pleats, preferably said structural elements being configured substantially co-extensive with the wall portions of the pleats.

3. The filter element of claim 2, wherein said structural elements direct the fluid flow of the non-filtrate in a direction substantially perpendicular to the longitudinal direction of the pleats, preferably by constituting a plurality of parallel flow channels for the non-filtrate, optionally said structural elements defining fluid flow paths for the non-filtrate extending substantially from one end of a pleat to its other end.

4. The filter element of any one of claims 1 to 3, said filter element being designed as a cross-flow filter element and further comprising a retentate receiving arrangement extending substantially along the whole length of the pleats, said retentate receiving arrangement being provided with openings substantially along the whole length of the pleats receiving retentate from the pleats at one end thereof in a direction substantially perpendicular to the longitudinal direction of the pleats.

5. The filter element of any one of claims 2 to 4, wherein the fluid flow paths have a cross-sectional area increasing in the direction of non-filtrate fluid flow.

6. The filter element of any one of claims 2 to 5, wherein the fluid flow paths of the non-filtrate within the pleats run from the open ends of the pleats to the closed ends where the flow direction of the non-filtrate is reversed in the direction to the open end of the pleats, where it optionally exits the pleats as retentate, said structural elements separating the flow of non-filtrate in the two opposite directions within each pleat.

7. The filter element of any one of claims 2 to 5, wherein the non-filtrate is supplied to the closed ends of the pleats and, optionally, the retentate is collected from the open ends of the pleats.

8. The filter element of any one of claims 2 to 5, wherein the non-filtrate is supplied to the open ends of the pleats and, optionally, the retentate is collected at the closed ends of the pleats.

9. The filter element of any one of claims 1 to 8, wherein the filter element comprises drainage elements arranged on the filtrate side of the sheet material.

10. The filter element of claim 9, wherein said drainage elements present a fluid flow resistance to the filtrate decreasing in the direction of non-filtrate fluid flow.

11. The filter element of any one of claims 1 to 10, wherein the plurality of pleats is arranged around a central axis of the filter module circumferentially at predetermined, preferably regular distances to one another, optionally the open ends of the pleats being located closer to the central axis than the closed ends of the pleats.

12. The filter element of claim 11, wherein the pleats are extending radially in a substantially straight direction.

13. The filter element of claim 11, wherein the pleats extend obliquely to the radial direction and optionally have a curved or arcuate cross-sectional shape.

14. The filter element of any one of claims 1 to 12, wherein the wall portions of the pleats have a greater distance from one another at the closed ends of the pleats than at the open ends.

15. The filter element of any one of claims 1 to 12, wherein the wall portions of the pleats have a greater distance from one another at the open ends of the pleats than at the closed ends.

16. The filter element of any one of claims 1 to 15, wherein the non-filtrate supply arrangement includes one or more feed channels, preferably having a cross-sectional area decreasing from the feed side to a closed end thereof.

17. The filter element of any one of claims 4 to 16, wherein the retentate receiving arrangement includes one or more channels, preferably having a cross-sectional area increasing from a closed end to an end discharging said retentate from the filter element.

18. The filter element of any one of claims 2 to 17, wherein the structural elements incorporate a filtrate collecting space within a pleat separated from the non-filtrate fluid flow by porous sheet material; preferably the filtrate collecting space being in direct fluid communication with the filtrate side of the wall portions of the plurality of pleats, or the structural element comprising a separate component of a fluid pervious material supporting porous sheet material and providing the filtrate collecting space; optionally said filtrate collecting space forming or contributing to a filtrate discharge channel extending substantially all along the longitudinal direction of the pleats.
